(19) Europäisches Patentamt
European Patent Office
Office européen des brevets

(11) EP 4 298 164 B1

(12) **EUROPEAN PATENT SPECIFICATION**

(45) Date of publication and mention of the grant of the patent:
**08.04.2026 Bulletin 2026/15**

(21) Application number: **22707427.5**

(22) Date of filing: **22.02.2022**

(51) International Patent Classification (IPC):
***C08L 77/06*** *(2006.01)* ***C08L 23/16*** *(2006.01)*
***C08K 7/14*** *(2006.01)* ***C08L 51/06*** *(2006.01)*
***C08G 69/26*** *(2006.01)*

(52) Cooperative Patent Classification (CPC):
(C-Sets available)
**C08L 51/06;** C08G 69/26; C08G 69/265; C08L 2205/08; H01Q 1/22; H01Q 1/42 (Cont.)

(86) International application number:
**PCT/EP2022/054428**

(87) International publication number:
**WO 2022/180051 (01.09.2022 Gazette 2022/35)**

(54) **POLYAMIDE COMPOSITIONS WITH FUNCTIONALIZED POLYOLEFIN AND MOBILE ELECTRONIC DEVICE COMPONENTS CONTAINING THEM**

POLYAMIDZUSAMMENSETZUNGEN MIT FUNKTIONALISIERTEM POLYOLEFIN UND KOMPONENTEN FÜR MOBILE ELEKTRONISCHE VORRICHTUNGEN DAMIT

COMPOSITIONS DE POLYAMIDE COMPRENANT DE LA POLYOLÉFINE FONCTIONNALISÉE ET COMPOSANTS DE DISPOSITIFS ÉLECTRONIQUES MOBILES LES CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2021 US 202163152392 P**
**29.06.2021 EP 21182545**

(43) Date of publication of application:
**03.01.2024 Bulletin 2024/01**

(73) Proprietor: **Syensqo Specialty Polymers USA, LLC**
**Alpharetta, GA 30005-3914 (US)**

(72) Inventors:
- **ANDERSON, Lindsey**
  **Cumming, Georgia 30040 (US)**
- **RECK, Benjamin**
  **Sugar Hill, Georgia 30518 (US)**
- **GOPALAKRISHNAN, Vijay**
  **Dunwoody, Georgia 30338 (US)**
- **NWOSU, Chinomso**
  **Alpharetta, Georgia 30004 (US)**
- **DAVIS, Raleigh L.**
  **Suwanee, Georgia 30024 (US)**
- **VINCENT, Matthew**
  **Buford, Georgia 30518 (US)**

(74) Representative: **Ferri, Isabella**
**SYENSQO S.A.**
**Viale Lombardia, 20**
**20021 Bollate (MI) (IT)**

(56) References cited:
**WO-A1-2020/104412** **CN-A- 110 437 612**
**CN-A- 111 117 232** **CN-B- 105 176 077**
**US-A1- 2016 168 381** **US-B2- 9 441 085**

- **DEVENDRA RAGHAVENDRA ET AL: "Rheology of metallocene polyethylene-based nanocomposites: Influence of graft modification", JOURNAL OF RHEOLOGY, vol. 50, no. 4, 1 July 2006 (2006-07-01), US, pages 415 - 434, XP055862449, ISSN: 0148-6055, [retrieved on 20211117], DOI: 10.1122/1.2209090**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **GRAFT POLYMER: "Material Comparison Report", 1 August 2019 (2019-08-01), Ljubljana, London, pages 1 - 10, XP055862534, Retrieved from the Internet <URL:https://graftpolymer.com/wp-content/uploads/2019/08/Full-Materials-Report-DuPont-GPO.pdf> [retrieved on 20211117]**
- **SHENYANG SIWEI POLYMER PLASTIC CO. ET AL: "Nylon toughening agent SWR-3F1", 17 November 2021 (2021-11-17), Shenyang, Liaoning Province, China, pages 1 - 3, XP055862584, Retrieved from the Internet <URL:http://en.syswpp.com/product/200.html> [retrieved on 20211117]**



(52) Cooperative Patent Classification (CPC): (Cont.)

C-Sets
**C08L 51/06, C08L 77/06, C08K 7/14**

## Description

### TECHNICAL FIELD

The invention relates to polymer compositions including a polyphthalamide, a functionalized polyolefin, and a glass fiber, the polymer composition having excellent dielectric performance, improved acid resistance and improved mechanical performance. The invention also relates to articles, such as mobile electronic device components, including the polymer composition.

### BACKGROUND

In the consumer electronics industry, the popularity of metal/plastic hybrid design is growing rapidly. Designers prefer to use metal as the main housing and chassis material for portable electronic devices, such as cellular phone, a laptop computer, a tablet computer, a personal digital assistant (PDA) or the like, due to the functional benefits it provides in terms of both aesthetic and useful properties such as such body strength and electromagnetic shielding. However, metal falls short in key areas, such as radio transparency, colorability, and cost. Additionally, the body of some mobile devices may include a portion having a complex geometry that may be difficult, costly or otherwise inefficient to fabricate from a metal. Thus, the portion of the body of a mobile device that has a complex geometry may also be formed of plastic. Because of these issues hybrid design solutions, i.e., able to combine the benefits of metal and plastic according to the exact functional requirements are often preferred.

Various techniques can be employed for plastic metal hybrid design. In recent decades, nano molding technology has been widely adopted to replace traditional-metal insert moldings in the consumer electronics industry. The system cost of manufacturing metal parts is reduced compared to traditional metal inserting molding routes. A polymeric structure can be overmolded, injection molded, and/or transfer molded directly on a metal substrate. For example, a polymeric part may be insert molded or overmolded to a metallic part to form a component of a mobile device.

Glass-fiber reinforced polymeric resins enable high adhesion between metal and plastic. Polymeric resins reinforced with glass fiber also enable the reduction in shrinkage and enhanced mechanical performance.

Because the metal is typically colored, a processing step called anodization is often used after the plastic metal hybrid part is molded. In anodization, the material undergoes multiple steps of exposure of corrosive acids and solutions to achieve a protective coating and the desired color. Chemical resistance, especially acid resistance, therefore becomes a requirement for polymeric resin selection, limiting the use of certain polymers such as polyamides. Due to their reduced weight and high mechanical performance, polyamide compositions and particularly including glass fibers are widely used in mobile electronic device components. Polyamides are a class of materials that are highly regarded for their resistance to alkaline hydrolysis, however their sensitivity to acid-catalyzed hydrolysis has limited their use in applications that require anodization.

For that reason, when the polymeric resin in the plastic part is sensitive to acid, the surface of the polymeric part needs to be masked before anodization to prevent acid attack, or the anodization of metal substrate may need to be carried out before the polymer resin is overmolded, injection molded, and/or transfer molded directly on the anodized metal substrate.

It is generally better when the entirety of the surfaces of the plastic part(s) and metallic part(s) of an electronic device component are anodized such that there is no need for masking during anodization or no need of anodizing the metal part beforehand, thereby increasing the efficiency of the fabrication procedure. In that way, even though the component is formed of both plastic and metal parts, the anodization coating provides a seamless appearance thereby improving the aesthetic appearance of the component of the portable electronic device. In this regard, the coating formed by anodization may also be dyed so as to have various colors and/or may be subjected to various surface finishes to further facilitate the aesthetic appearance of the portable electronic device.

WO2020/104412A1 relates to polymer compositions including an aliphatic or semi-aromatic polyamide and a functionalized polyolefin blend having excellent dielectric performance, applicable in mobile electronic device components. The disclosed semi-aromatic polyamide are derived from an aromatic diamine.

US9441085B2 relates to polyamide compositions featuring improved thermal stability, applicable in e.g. molded parts of electric or electronic installations, and discloses a composition E1 comprising 1.7 wt.% maleic acid anhydride (MAH)-modified linear low-density polyethylene (LLDPE), 52.5 wt.% PA10,T/10,6 (92/8) and 35 wt.% glass fibers.

CN111117232A relates to nano-injection materials, and particularly relates to a polyamide resin composition for ceramic nano-injection, applicable in mobile phone frames. A composition comprising 1-3 wt.-% MAH functionalised ethylene-octene copolymer, 51-71 wt.-% PA9T, and 20-40 wt.-% glass fibers is disclosed.

CN105176077B relates to flame retardant high modulus nylon material and specifically discloses a composition comprising 1 wt.% of a MAH functionalized ethylene-octene copolymer as a compatibiliser, 10 wt.% of PA9T, 10 wt.% of PA10, 10 and 60 wt.% glass fibers. The compatibiliser is present in an amount of preferably 0.5-5.0 wt.%, and is derived

from polyethylene and/or polypropylene.

US2016/168381A1 relates to a semi-aromatic polyamide resin composition and a molded product containing the same, and discloses a reference composition in Table 1 comprising 5 wt.-% of an MAH-modified ethylene-1-butene copolymer, 65 wt.-% of PA9T and 30 wt.-% glass fibers.

CN110437612A relates bio-based nylon composite material for door and window insulation strips and a preparation method thereof, and discloses compositions in examples 1-6 ( table 1) comprising 3-5 wt.% MAH-functionalised polyethylene, 15-20 wt.% PA10T and 20-25 wt.% glass fibers, further comprising PA56 and/or PA66. The present invention aims at providing polyamide compositions that have improved mechanical properties and also acid resistance. These polyamide compositions would be especially suitable for making articles, such as mobile device components that may be subjected to acid exposure, such as during anodization.

**SUMMARY**

The invention is defined in the appended claims. A first aspect of the present invention is directed to a polymer composition comprising:

- a functionalized polyolefin (POr),
- a polyamide (PA) selected from polyphthalamides (PPA) having a carbon-to-amide molar ratio greater than 8,
- a glass fiber, and
- a functionalized polyolefin ($PO_f$) weight ratio of more than 0% and at most 27%,
  wherein
- the $PO_f$ weight ratio is given by the formula: $100 \times \frac{W_{PO}}{W_{PO}+W_{PA}}$, and
- $W_{PA}$ and $W_{PO}$ are, respectively, the weight of the polyamide and of the functionalized polyolefin in the polymer composition;
  wherein
- the functionalized polyolefin comprises recurring units $R_{PO1}$ and $R_{PO2}$ that are represented by the following formulae, respectively:

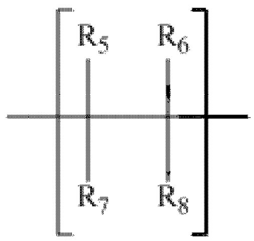
(6) and
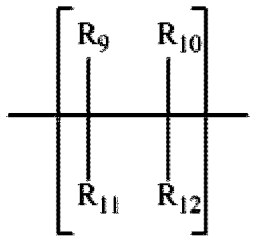
(7),

wherein $R_5$ to $R_8$ are independently selected from the group consisting of a hydrogen and an alkyl group represented by the formula $-(CH_2)_m-CH_3$,
where m is an integer from 0 to 5; $R_9$ to $R_{12}$ are independently selected from the group consisting of a hydrogen, an alkyl group represented by the formula $-(CH_2)_m-CH_3$, where m, is an integer from 0 to 5, and a reactive group that reacts with an amine group or a carboxylic acid group of the polyamide; and wherein at least one of $R_9$ to $R_{12}$ is a reactive group, and

- the functionalized polyolefin comprises from 0.05 mol% to 1.5 mol% of recurring unit $R_{PO2}$.
- the functionalized polyolefin is selected from the group consisting of a functionalized polypropylene, a functionalized polymethylpentene, a functionalized polybutene-1, a functionalized polyisobutylene, a functionalized ethylene propylene rubber, and a functionalized ethylene propylene diene monomer rubber, and
- the glass fiber content in the polymer composition is from 20 wt.% to 55 wt%, relative to the total weight of the polymer composition.

A second aspect of the present invention pertains to a mobile electronic device component comprising the polymer composition as described herein, preferably, the mobile electronic device component being an antenna such as a mobile electronic antenna, an antenna window, an antenna housing or a mobile electronic housing.

A third aspect of the present invention pertains to a method for making a mobile electronic device component, comprising: first overmolding, injection molding or transfer molding the polymer composition as described herein onto a

metal substrate to form an assembly, and then subjecting the assembly to anodization.

The various aspects, advantages, and features of the invention will be more readily understood and appreciated by reference to the detailed description and examples.

## BRIEF DESCRIPTION OF DRAWINGS

**FIG. 1** represents the un-notched Izod impact (measured according to ASTM D256) of polyamide/POr blends with respect to different $PO_f$ weight ratios of from 0 to 14.4%, when the $PO_f$ is maleic anhydride functionalized polypropylene copolymer (MA-PP), in which values in ft-lb/in are convertible into J/m using the following conversion factor: 1 ft-lb/in = 0.0187 J/m.

**FIG. 2** represents the dielectric constant $D_k$ at 2.45 GHz (measured according to ASTM D2520) of polyamide/POr blends with respect to various $PO_f$ weight ratios of from 0 to 14.4%, when the $PO_f$ is maleic anhydride functionalized polypropylene copolymer (MA-PP).

## DEFINITIONS

In the present descriptive specification, some terms are intended to have the following meanings.

In the present specification, the choice of an element from a group of elements also explicitly describes:

- the choice of two or the choice of several elements from the group,
- the choice of an element from a subgroup of elements consisting of the group of elements from which one or more elements have been removed.

In the present specification, the description of a range of values for a variable, defined by a bottom limit, or a top limit, or by a bottom limit and a top limit, also comprises the embodiments where the variable is chosen, respectively, within the range of values: excluding the bottom limit, or excluding the top limit, or excluding the bottom limit and the top limit. Any recitation herein of numerical ranges by endpoints includes all numbers subsumed within the recited ranges as well as the endpoints of the range and equivalents.

The term "comprising" includes "consisting essentially of" and also "consisting of".

The use of the singular 'a' or 'one' herein includes the plural unless specifically stated otherwise.

In addition, if the term "approximately", "about" or "*ca.*" is used before a quantitative value, the present teachings also include the specific quantitative value itself, unless specifically stated otherwise. As used herein, the term "approximately", "about" or "*ca.*" refers to a +-10% variation from the nominal value unless specifically stated otherwise.

## DETAILED DESCRIPTION OF PREFERRED EMBODIMENTS

It was surprisingly found that, in order to improve the tensile elongation and un-notched Izod impact value of a polyphthalamide-containing composition, one can add a functionalized polyolefin at a functionalized polyolefin weight ratio ("POr weight ratio") of more than 0 and at most 27%, preferably at most 25%, or at most 20%, or at most 15%, wherein the $PO_f$ weight ratio is given by the formula: $100 \times \frac{W_{PO}}{W_{PO}+W_{PA}}$ , and $W_{PA}$ and $W_{PO}$ are, respectively, the weights of the polyamide and of the functionalized polyolefin in the polymer composition. The $PO_f$ weight ratio in the polymer composition is preferably from 1% to 27 %, preferably from 2% to 25%, more preferably from 3% to 20%, or from 3% to 15%, or from 3.5% to 15%, or from 3.5% to 14.5%, or from 3.6% to 14.5%.

In the $PO_f$ weight ratio, the weight of the polyamide in the polymer composition according to the invention is preferably the weight of the polyamide(s) selected from polyphthalamides having a carbon-to-amide molar ratio (C/CONH), or "C/Amide molar ratio" greater than 8 present in the polymer composition.

It was further surprisingly found that, in order to improve the acid resistance of a polyphthalamide-containing composition, one can select a polyphthalamide with a C/Amide molar ratio greater than 8, or at least 8.1, or at least 8.2, or at least 8.3, or at least 8.4, or at least 8.5, or at least 9.

### *Polyamide component (PA)*

The polymer composition according to the invention comprises a polyamide selected from polyphthalamides (PPA) having a C/Amide molar ratio greater than 8.

The polyphthalamide in the polymer composition preferably has a C/Amide molar ratio of at least 8.1, or at least

8.2, or at least 8.3, or at least 8.4, or at least 8.5, or at least 9. The C/Amide molar ratio of the polyphthalamide may be at most 15, or at most 13, or at most 12. A suitable C/Amide molar ratio for the polyphthalamide may range from more than 8 to at most 15, or from 8.1 to 14, or from 8.5 to 13, or from 9 to 12.

As used herein, a polyphthalamide (PPA) is generally obtained by polycondensation between at least one diacid and at least one diamine in which at least 55 mol% of the diacid portion of the repeating unit in the PPA polymer chain is terephthalic acid and/or isophthalic acid, and in which at least one diamine is aliphatic. Suitable aliphatic diamines are diamines having at least 6 carbon atoms and up to 14 carbon atoms, such as hexamethylenediamine, nonamethylenediamine, 2-methyl-octamethylenediamine, and decamethylenediamine; preferred aliphatic diamines have more than 6 carbon atoms and up to 14 carbon atoms; more preferred aliphatic diamines have more than 7 carbon atoms and up to 12 carbon atoms. If an aliphatic diacid is used during polycondensation to form the PPA, suitable aliphatic diacids are adipic acid, sebacic acid, and dodecandioic acid; however preferred aliphatic diacids have more than 6 carbon atoms and up to 12 carbon atoms, such as sebacic acid and dodecaneioic acid. Polyphthalamides (PPA) are considered a subset of semi-aromatic polyamides.

In some embodiments, the polyamide in the polymer composition is at least one polyphthalamide having a C/Amide molar ratio > 8 selected from the group consisting of PA10,T/10,I; PA10,T; PA9,T; and any combinations thereof.

In some embodiments, the concentration of the at least one polyphthalamide having a C/amide molar ratio > 8 in the polymer composition is

- at least 40 wt.%, or at least 45 wt.%, or at least 50 wt.%, or at least 54 wt.%, of such polyphthalamide having a C/amide molar ratio > 8, based on the total weight of the polymer composition, and/or
- at most 80 wt.%, or at most 78 wt.%, or at most 77 wt.%, or at most 75 wt.%, of such polyphthalamide having a C/amide molar ratio > 8, based on the total weight of the polymer composition.

In some embodiments, the concentration of the at least one polyphthalamide having a C/amide molar ratio > 8 in the polymer composition is from 30 wt.% to 78 wt.%, or from 40 wt.% to 78 wt.%, or from 40 wt. % to 77 wt.%, or from 45 wt. % to 77 wt.%, or from 50 wt. % to 70 wt.%, or from 50 wt.% to 80 wt.%, or from 55 wt.% to 78 wt.%, of such polyphthalamide, based on the total weight of the polymer composition.

In some embodiments, the polymer composition includes a plurality of distinct polyphthalamide having a C/amide molar ratio > 8 according to the above description. In some such embodiments, the total concentration of distinct polyphthalamides having a C/amide molar ratio > 8 is within the ranges described above.

In preferred embodiments, the polymer composition does not include a semi-aromatic polyamide or polyphthalamide obtained by polycondensation between diacid and diamine monomers, wherein one monomer is aliphatic and has 6 carbon atoms or less.

In preferred embodiments, the polymer composition excludes an aliphatic polyamide.

In preferred embodiments, the polymer composition excludes a polyamide having a number average molecular weight of less than 1600.

In some embodiments, the polymer composition does not include a semi-aromatic polyamide which is not a polyphthalamide, and/or does not include a polyphthalamide having a C/Amide molar ratio of at most 8.

In some embodiments, the polymer composition excludes a polyamide produced by polycondensation in which the diacid does not include terephthalic acid and/or isophthalic acid.

### *Optional polyamide component(s)*

In alternate embodiments, the polymer composition optionally includes another polyamide which is different than a polyphthalamide having a C/amide molar ratio > 8.

The polymer composition may further include at least one semi-aromatic polyamide which is not a polyphthalamide, at least one polyphthalamide having a C/Amide molar ratio of at most 8, at least one aliphatic polyamide, or combinations thereof.

Aliphatic polyamides or semi-aromatic polyamides (excluding polyphthalamides) are generally obtained by polycondensation between at least one aromatic or aliphatic saturated diacid and at least one aliphatic saturated or aromatic primary diamine, lactam, amino-acid or a mixture of these different monomers. Suitable aliphatic diamines are hexamethylenediamine, nonamethylenediamine, 2-methyl-octamethylenediamine, and decamethylenediamine. Suitable aromatic diamines are meta-xylylenediamine (MXDA) and para-xylylenediamine (PXDA). Suitable aliphatic diacids are adipic acid, sebacic acid, and dodecandioic acidSuitable lactams are caprolactam, undecylolactam, and laurolactam. Suitable amino-acids are 11-aminoundecanoic acid and 12-aminolauric acid. Aromatic diacids such as teraphthalic acid and isophthalic acid are not used in the polycondensation of such polyamides, or less than 55 mol%, preferably at most 50 mol%, more preferably at most 45 mol%, of the diacid portion of the repeating unit in the semi-aromatic polyamide chain is terephthalic acid and/or isophthalic acid.

As used herein, an aliphatic polyamide includes at least 50 mol% of a recurring unit which has an amide bond (-NH-CO-) and is free of any aromatic groups. Put another way, both the diacid, and the diamine, lactam, or amino-acid forming the polyamide's recurring units through polycondensation are free of any aromatic groups.

In some embodiments, the polymer composition may further include a semi-aromatic polyamide which is not a polyphthalamide, such as PAMXD6 (poly(m-xylylene adipamide), PAMXD10 (poly(m-xylylene sebacamide) and/or PAPXD10 (poly(p-xylylene sebacamide)), preferably may further include PAPXD10.

Examples of a polyphthalamide having a C/Amide molar ratio of at most 8 are PA6,T/6,I or PA6,T/6,6 or PA6,I/6,6 or PA6,6/6,I or PA6,6/6,T.

In some embodiments, the polymer composition may comprise a polyphthalamide selected from the group consisting of PA10,T/10,I; PA10,T; PA9,T and any combination thereof, and at least one semi-aromatic polyamide selected from the group consisting of PA6,T/6,I; PAMXD6; PAPXD10; and any combinations thereof.

In some embodiments, the polymer composition may further include an aliphatic polyamide.

Suitable aliphatic polyamide may be selected from the group consisting of PA6,10; PA10,10; PA11; PA12 and PA10,12; or preferably selected from the group consisting of PA10,10; PA11; PA12 and PA10,12.

In some embodiments, the concentration of all polyamides in the polymer composition is at least 40 wt.%, or at least 45 wt.%, or at least 50 wt.%, or at least 54 wt.%, based on the total weight of the polymer composition, and /or at most 80 wt.%, or at most 78 wt.%, or at most 77 wt.%, or at most 75 wt.%, based on the total weight of the polymer composition. In some embodiments, the concentration of all polyamides in the polymer composition is from 30 wt.% to 78 wt.%, or from 40 wt.% to 78 wt.%, or from 40 wt. % to 77 wt.%, or from 45 wt. % to 77 wt.%, or from 50 wt. % to 70 wt.%, or from 50 wt.% to 80 wt.%, or from 55 wt.% to 78 wt.%, based on the total weight of the polymer composition.

In some embodiments, when the polymer composition comprises at least one polyphthalamide having a C/Amide molar ratio > 8 and one or more other polyamides, the weight ratio of such polyphthalamide(s) is greater than the weight ratio of the other polyamide(s), such weight ratios being based on the total weight of all polyamides in the polymer composition.

The polyamide in the polymer composition may be a semi-crystalline or amorphous polyamide.

As used herein, a semi-crystalline polyamide comprises a heat of fusion ("$\Delta H_f$") of at least 5 Joules per gram (J/g) measured using differential scanning calorimetry at a heating rate of 20° C/min. Similarly, as used herein, an amorphous polyamide comprises a $\Delta H_f$ of less than 5 J/g measured using differential scanning calorimetry at a heating rate of 20° C/min. $\Delta H_f$ can be measured according to ASTM D3418. In some embodiments, the $\Delta H_f$ is at least 20 J/g, at least 30 J/g or at least 40 J/g.

In some embodiments, the polyamide has a Tg of at least 100° C, at least 110° C, or at least 115° C. Additionally or alternatively, in some embodiment, the polyamide (PA) has a Tg of no more than 200° C, no more than 180° C, no more than 160° C, no more than 150° C, no more than 140° C, or no more than 135° C. In some embodiments, the polyamide (PA) has a Tg of from 100° C to 150° C, from 110° C to 140° C, or from 115° C to 135° C. In some embodiments, the polyamide has a Tg of from 100° C to 200° C, from 110° C to 180° C, or from 115° C to 160° C. In some embodiments, the polyamide has a melting temperature ("Tm") of at least 260° C, at least 265° C, at least 290° C, at least 300° C, or at least 310° C. Additionally or alternatively, in some embodiments, the polyamide has a Tm of no more than 360° C, no more than 350° C, or no more than 340° C. In some embodiments the polyamide has a Tm of from 290° C to 360° C, from 300° C to 350° C, or from 310° C to 340° C. Tg and Tm can be measured according to ASTM D3418.

***Functionalized polyolefin component ($PO_f$)***

The polymer composition comprises a functionalized polyolefin. As used herein, a polyolefin refers to any polymer having at least 50 mol% of a recurring unit $R_{PO}$. In some embodiments, the concentration of recurring units $R_{PO}$ is at least 60 mol%, at least 70 mol%, at least 80 mol%, at least 90 mol%, at least 95 mol%, at least 99 mol%, or at least 99.9 mol%. As used herein, mol% is relative to the total number of recurring units in the polyolefin, unless explicitly stated otherwise. Recurring unit $R_{PO}$ is represented by the following:

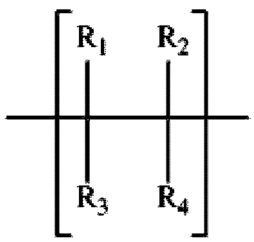

where $R_1$ to $R_4$ are independently selected from the group consisting of a hydrogen, and an alkyl group represented by the

formula $-(CH_2)_n-CH_3$, where n is an integer from 0 to 5. For clarity, when n is zero, the alkyl group is a methyl group.

A functionalized polyolefin is a polyolefin that include a reactive group that reacts with an amine group or a carboxylic acid group on the polyamide, resulting in a covalent bond (*e.g.,* an amide bond) between the polyolefin and the polyamide(s) in the polymer composition. Put another way, the functionalized polyolefin includes at least some recurring units $R^*_{PO}$ according to formula (1) and distinct from recurring unit $R_{PO}$, in which at least one of $R_1$ to $R_4$ is replaced by a reactive group. Of course, in embodiments in which the polyolefin is fully functionalized, the functionalized polyolefin includes recurring units $R^*_{PO}$ and is free of recurring units $R_{PO}$.

Functionalized polyolefins according to the invention are selected from the group consisting of functionalized polypropylene, a functionalized polymethylpentene, a functionalized polybutene-1, a functionalized polyisobutylene, a functionalized ethylene propylene rubber, and a functionalized ethylene propylene diene monomer rubber. Desirable reactive groups include, but are not limited to, maleic anhydride, epoxide, isocyanate, and acrylic acid. Of course, in the polymer composition, the polyolefin is covalently bonded to the polyamide through residues formed from the reaction of at least some of the reactive groups on the polyolefin and the amine or carboxylic acid groups on the polyamide. For ease of reference, it will be understood that a reference to the reactive group on the functionalized polyolefin polymer in the polymer composition refers to any unreacted reactive groups on the functionalized polyolefin as well as the residues formed from the reaction between the reactive group and an amine or carboxylic acid on the polyamide. For example, the person of ordinary skill in the art will understand that reference to maleic anhydride functionalized polyolefin in the polymer compositions refers to any unreacted maleic anhydride groups on the polyolefin polymer, as well as the residues formed from reaction of the maleic anhydride and the amine groups on the polyamide.

In some embodiments the reactive group is represented by a formula selected from the following group of formulae:

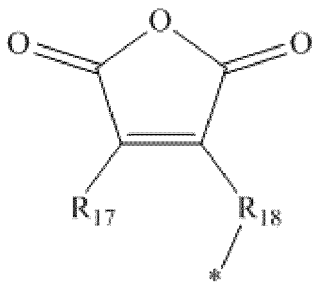

(2),

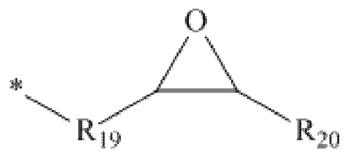

(3),

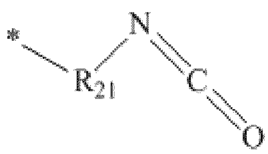

(4),

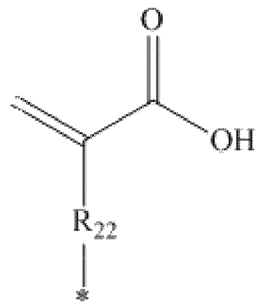

(5),

where $R_{17}$ and $R_{20}$ are selected from hydrogen and an alkyl group and $R_{18}$, $R_{19}$, $R_{21}$ and $R_{22}$ are selected from a bond and an alkyl group. Preferably, $R_{17}$ and $R_{20}$ are both hydrogen. Preferably, $R_{18}$, $R_{19}$, $R_{21}$ and $R_{22}$ are all a bond. For clarity, the "*" in formulae (2) to (5) indicate a bond to the carbon of the recurring unit $R^*_{PO}$.

In preferred embodiments, the functionalized polyolefin may be functionalized with a reactive group selected from the group consisting of a maleic anhydride, epoxide, isocyanate, and acrylic acid, preferably the reactive group is maleic anhydride.

The polyolefin can be functionalized at its chain ends or along the backbone (or both). In some embodiments in which the polyolefin is functionalized along the backbone, the functionalized polyolefin includes, in total, at least 50 mol% of a recurring unit $R_{PO1}$ and a recurring unit $R_{PO2}$ (defined below). In some embodiments, the combined concentration of recurring units $R_{PO1}$ and $R_{PO2}$ in the functionalized polyolefin is at least 60 mol%, at least 70 mol%, at least 80 mol%, at least 90 mol%, at least 95 mol%, at least 95 mol%, or at least 99 mol%, based on total concentration of recurring units in the functionalized polyolefin. Within the ranges of the combined concentration of $R_{PO1}$ and $R_{PO2}$ described above, in some embodiments, the concentration of recurring unit $R_{PO2}$ is at least 0.05 mol% to 10 mol%, from 0.05 mol% to 8 mol%, from

0.05 mol% to 6 mol%, from 0.05 mol% to 4 mol%, from 0.05 mol% to 2 mol%, from 0.05 mol% to 1.5 mol%, or from 0.1 mol% to 1.5 mol%, to the total concentration of recurring units in the functionalized polyolefin.

Recurring units $R_{PO1}$ and $R_{PO2}$ are represented by the following formulae (6) and (7), respectively:

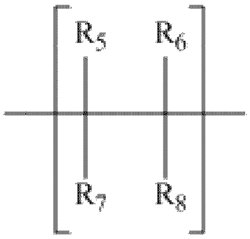

(6) and

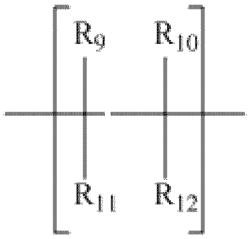

(7),

where $R_5$ to $R_8$ are independently selected from the group consisting of a hydrogen and an alkyl group represented by the formula $-(CH_2)_m-CH_3$, where m is an integer from 0 to 5; $R_9$ to $R_{12}$ are independently selected from the group consisting of a hydrogen, an alkyl group represented by the formula $-(CH_2)_{m'}-CH_3$, where m, is an integer from 0 to 5, and a reactive group that reacts with an amine group or a carboxylic acid group of the polyamide; and wherein at least one of $R_9$ to $R_{12}$ is a reactive group. In some embodiments, the reactive group is represented by a formula selected from the group consisting of formulae (2) to (5). In some embodiments, $R_5$ to $R_7$ are all hydrogen and $R_8$ is a $-CH_3$. Additionally or alternatively, in some embodiments, $R_9$ and $R_{11}$ are both hydrogen, $R_{10}$ is a $-CH_3$, and $R_{12}$ is a reactive group as described above, preferably maleic anhydride. Excellent results were obtained maleic anhydride functionalized polypropylene.

In some of the above embodiments in which the functionalized polyolefin includes both recurring units $R_{PO1}$ and $R_{PO2}$, the molar ratio of $R_{PO2}$ to ($R_{PO1}$ + $R_{PO1}$) (number of moles of recurring unit $R_{PO1}$/number of moles of recurring unit $R_{PO1}$ + $R_{PO2}$) is from 0.01 mol% to 6 mol%, from 0.01 mol% to 5.6 mol% or from 0.01 mol% to 5 mol%.

Functionalized polyolefins according to the invention are selected from the group consisting of functionalized polypropylene, a functionalized polymethylpentene, a functionalized polybutene-1, a functionalized polyisobutylene, a functionalized ethylene propylene rubber, and a functionalized ethylene propylene diene monomer rubber, preferably the functionalized polyolefin polymer is a functionalized polypropylene.

In some embodiments, the functionalized polyolefin has a melt mass flow rate ("MFR") of at least 1 g/10 min and/or a MFR of no more than 120 g/10 min. In some embodiments, the functionalized polyolefin has a MFR of from 5 g/10 min to 100 g/10 min, or from 10 g/10 min. to 80 g/10 min., or from 15 g/10 min to 70 g/10 min. MFR can be measured according to ASTM D1238 at a 190° C and 1.2 kg.

In some embodiments, the functionalized polyolefin concentration in the polymer composition is at most 20 weight percent ("wt.%"), at most 17 wt.%, or at most 15 wt.%. ; and /or at least 1 wt.%., or at least 2.5 wt.%, or at least 5 wt.%. In some embodiments, the functionalized polyolefin concentration in the polymer composition is from 1 wt.% to 20 wt.%, or from 2 wt.% to 20 wt.%, or from 2 wt.% to 17 wt.%, or from 2 wt.% to 15 wt.%, or from 2.5 wt.% to 15 wt.%, or from 5 wt.% to15 wt.%, or from 2.5 wt.% to 10 wt.%. As used herein, weight percent of the functionalized polyolefin is relative to the total weight of the polymer composition, unless explicitly noted otherwise.

In some embodiments, the polymer composition includes a plurality of distinct functionalized polyolefins according to the above description, and the total concentration of these distinct functionalized polyolefins is within the ranges described above.

The person of ordinary skill in the art will recognize that the selections of the functionalized polyolefin concentration and the polyamide concentration as described herein are related by the polyolefin weight ratio. The selection of the functionalized polyolefin concentration and the polyamide concentration is made such that the polyolefin weight ratio is within the selected range and such that the total concentration of functionalized polyolefin(s), the polyphthalamide and optional other polyamide(s), the glass fiber, any optional reinforcing agent (e.g., glass spheres or carbon fiber) and optional additives within the polymer composition less than or equal to 100 wt.%.

## Glass Fiber

The polymer composition also comprises at least one glass fiber. Glass fibers are silica-based glass compounds that contain several metal oxides which can be tailored to create different types of glass. The main oxide is silica in the form of silica sand; the other oxides such as calcium, sodium and aluminum are incorporated to reduce the melting temperature and impede crystallization.

The glass fibers may be endless fibers or chopped glass fibers.

In some embodiments, the glass fibers have an average length of from 3 mm to 50 mm. In some such embodiments, the glass fibers have an average length of from 3 mm to 10 mm, from 3 mm to 8 mm, from 3 mm to 6

mm, or from 3 mm to 5 mm. In alternative embodiments, the glass fibers have an average length of from 10 mm to 50 mm, from 10 mm to 45 mm, from 10 mm to 35 mm, from 10 mm to 30 mm, from 10 mm to 25 mm or from 15 mm to 25 mm.

In some embodiments, the glass fibers have generally an equivalent diameter of from 5 to 20 μm, preferably of from 5 to 15 μm and more preferably of 5 to 10 μm.

All glass fiber types, such as A, C, D, E, M, S, R, T glass fibers (as described in chapter 5.2.3, pages 43-48 of Additives for Plastics Handbook, 2nd ed, John Murphy), or any mixtures thereof or mixtures thereof may be used.

E, R, S and T glass fibers are well known in the art. They are notably described in Fiberglass and Glass Technology, Wallenberger, Frederick T.; Bingham, Paul A. (Eds.), 2010, XIV, chapter 5, pages 197-225. R, S and T glass fibers are composed essentially of oxides of silicon, aluminium and magnesium. In particular, those glass fibers comprise typically from 62-75 wt. % of $SiO_2$, from 16-28 wt. % of $Al_2O_3$ and from 5-14 wt. % of MgO. On the other hand, R, S and T glass fibers comprise less than 10 wt. % of CaO.

In some embodiments, the glass fiber is a high modulus glass fiber. High modulus glass fibers have an elastic modulus of at least 76, preferably at least 78, more preferably at least 80, and most preferably at least 82 GPa as measured according to ASTM D2343. Examples of high modulus glass fibers include, but are not limited to, S, R, and T glass fibers. A commercially available source of high modulus glass fibers is S-1 and S-2 glass fibers from Taishan and AGY, respectively.

In some embodiments, the glass fiber is a low $D_k$ glass fiber. Low $D_k$ glass fibers have a dielectric constant of from 4.0 to 5.5, from 4.0 to 5.4, from 4.0 to 5.3, from 4.0 to 5.2, from 4.0 to 5.1, or from 4.0 to 5.0, at a frequency of 1 MHz, 600 MHz, 1 GHz and 2.4 GHz. Low $D_k$ glass fibers can also have a low Dr ("low $D_k$ / $D_f$ glass fiber"). Such glass fibers have a $D_f$ of rom 0.0005 to 0.001, at a frequency of 1 MHz, 1 GHz, 600 MHz and 2.4 GHz. The $D_f$ and $D_k$ of the glass fibers can be measured according to ASTM D150 (1.0 MHz) and ASTM D2520 (600 MHz, 1.0 GHz and 2.4 GHz).

In some embodiments, the glass fiber is a high modulus and low $D_k$ glass fiber.

In some embodiments, the glass fiber may have a dielectric constant of 4.0 to 5.5 at a frequency of 1 MHz measured according to ASTM D150 and/or has a tensile modulus of at least 76 GPa as measured according to ASTM D2343.

The morphology of the glass fiber is not particularly limited. As noted above, the glass fiber can have a circular cross-section ("round glass fiber") or a non-circular cross-section ("flat glass fiber"). Examples of suitable flat glass fibers include, but are not limited to, glass fibers having oval, elliptical and rectangular cross sections.

In some embodiments in which the polymer composition includes a flat glass fiber, the flat glass fiber has a cross-sectional longest diameter of at least 15 μm, preferably at least 20 μm, more preferably at least 22 μm, still more preferably at least 25 μm. Additionally or alternatively, in some embodiments, the flat glass fiber has a cross-sectional longest diameter of at most 40 μm, preferably at most 35 μm, more preferably at most 32 μm, still more preferably at most 30 μm. In some embodiments, the flat glass fiber has a cross-sectional diameter was in the range of 15 to 35 μm, preferably of 20 to 30 μm and more preferably of 25 to 29 μm. In some embodiments, the flat glass fiber has a cross-sectional shortest diameter of at least 4 μm, preferably at least 5 μm, more preferably at least 6 μm, still more preferably at least 7 μm. Additionally or alternatively, in some embodiments, the flat glass fiber has a cross-sectional shortest diameter of at most 25 μm, preferably at most 20 μm, more preferably at most 17 μm, still more preferably at most 15 μm. In some embodiments, the flat glass fiber has a cross-sectional shortest diameter was in the range of 5 to 20 preferably of 5 to 15 μm and more preferably of 7 to 11 μm.

In some embodiments, the flat glass fiber has an aspect ratio of at least 2, preferably at least 2.2, more preferably at least 2.4, still more preferably at least 3. The aspect ratio is defined as a ratio of the longest diameter in the cross-section of the glass fiber to the shortest diameter in the same cross-section. Additionally or alternatively, in some embodiments, the flat glass fiber has an aspect ratio of at most 8, preferably at most 6, more preferably of at most 4. In some embodiments, the flat glass fiber has an aspect ratio of from 2 to 6, and preferably, from 2.2 to 4.

In some embodiments, in which the glass fiber is a round glass fiber, the glass fiber has an aspect ratio of less than 2, preferably less than 1.5, more preferably less than 1.2, even more preferably less than 1.1, most preferably, less than 1.05. Of course, the person of ordinary skill in the art will understand that regardless of the morphology of the glass fiber (e.g., round or flat), the aspect ratio cannot, by definition, be less than 1.

The glass fiber content in the polymer composition according to the invention is at least 20 wt.%, or at least 25 wt.%, or at least 30 wt. % and no more than 55 wt.%, or no more than 50 wt.%, or no more than 45 wt.%. The glass fiber content in the polymer composition according to the invention is from 20 wt.% to 55 wt.%, or from 25 wt.% to 55 wt.%, or from 30 wt.% to 55 wt.%, or from 20 wt.% to 50 wt.%, or from 25 wt.% to 50 wt.%, or from 30 wt.% to 50 wt.% , or from 30 wt.% to 45 wt.%. As used herein, the weight content (wt.%) of the glass fiber is relative to the total weight of the polymer composition, unless explicitly noted otherwise.

***Optional Reinforcing Agent***

The polymer composition may also comprise at least one reinforcing agent which is different than the glass fiber, as described above.

A large selection of reinforcing agents, also called reinforcing fibers or fillers, may be added to the polymer composition according to the present invention. They can be selected from fibrous and particulate reinforcing agents.

The reinforcing agent may be selected from mineral fillers (such as talc, mica, kaolin, calcium carbonate, calcium silicate, magnesium carbonate), carbon fibers, synthetic polymeric fibers, aramid fibers, aluminum fibers, titanium fibers, magnesium fibers, boron carbide fibers, rock wool fibers, steel fibers, wollastonite, glass balls (e.g., hollow glass balls or microspheres), and a different type of glass fiber, i.e., different than the glass fiber used in the polymer composition according to the invention.

A fibrous reinforcing filler is considered herein to be a material having length, width and thickness, wherein the average length is significantly larger than both the width and thickness. Generally, such a material has an aspect ratio, defined as the average ratio between the length and the largest of the width and thickness of at least 5, at least 10, at least 20 or at least 50. In some embodiments, the reinforcing fibers (e.g., carbon fibers) have an average length of from 3 mm to 50 mm. In alternative embodiments, the reinforcing fibers have an average length of from 10 mm to 50 mm. The average length of the reinforcing fibers can be taken as the average length of the reinforcing fibers prior to incorporation into the polymer composition or can be taken as the average length of the reinforcing fiber in the polymer composition

A particulate reinforcing agent may be selected from mineral fillers (such as talc, mica, kaolin, calcium carbonate, calcium silicate, magnesium carbonate) or glass balls (e.g., hollow glass balls or microspheres).

The reinforcing agent may be present in the composition in a total amount of at least 5 wt. %, or at least 10 wt. %, or at least 15 wt. %, or at least 20 wt. % by weight, or at least 25 wt. %, and/or at most 50 wt. %, or at most 45 wt. %, based on the total weight of the polymer composition. The reinforcing agent may for example be present in the polymer composition in an amount ranging between 5 and 50 wt. %, for example between 5 and 15 wt. %, or between 10 and 50 wt. %, between 20 and 50 wt. %, or between 25 and 45 wt. %, based on the total weight of the polymer composition.

In some embodiments, the polymer composition comprising the glass fiber does not include a reinforcing agent other than the glass fiber.

In some embodiments, the polymer composition excludes glass spheres or balls, and in particular excludes hollow glass balls or microspheres.

***Optional Additives***

In some embodiments, the polymer composition optionally includes an additive selected from the group consisting of tougheners, plasticizers, light stabilizers, ultra-violet ("UV") stabilizers, heat stabilizers, pigments, dyes, antistatic agents, flame retardants, impact modifiers, lubricants, nucleating agents, antioxidants, processing aids, and any combination of one or more thereof. In some embodiments in which the polymer composition includes optional additives, the total concentration of additives is no more than 15 wt.%, no more than 10 wt.%, no more than 5 wt.%, no more than 1 wt.%, no more 0.5 wt.%, no more than 0.4 wt.%, no more than 0.3 wt.%, no more than 0.2 wt.%, or no more than 0.1 wt.%, based on the total weight of the polymer composition.

***Preparation of the Polymer Composition***

The invention further pertains to a method of making the polymer composition as above detailed, said method comprising melt-blending the polyamide selected from polyphthalamides having a C/Amide molar ratio greater than 8, the functionalized polyolefin, the glass fiber, an optional reinforcing agent different than the glass fiber, any optional other polyamide(s), and any other optional additives, e.g., a lubricant, a UV stabilizer, a heat stabilizer, an impact modifier, etc.

Any melt-blending method may be used for mixing polymeric and non-polymeric ingredients in the context of the present invention.

For example, polymeric ingredients (such as the at least one polyphthalamide having a C/Amide molar ratio greater than 8 and the functionalized polyolefin) and non-polymeric ingredient(s) (such as the glass fiber) may be fed into a melt mixer, such as single screw extruder or twin screw extruder, agitator, single screw or twin screw kneader, or Banbury mixer, and the addition step may be addition of all ingredients at once or gradual addition in batches. When the polymeric and non-polymeric ingredients are gradually added in batches, a part of the polymeric ingredients and/or of the non-polymeric ingredient(s) is first added, and then is melt-mixed with the remaining polymeric ingredients and/or the remaining non-polymeric ingredient(s) that are subsequently added, until an adequately mixed composition is obtained.

If the glass fiber or the optional reinforcing agent presents a long physical shape (for example, a long or 'endless' fiber), drawing extrusion molding, poltrusion to form long-fiber pellets or poltrusion to form unidirectional materials may be used to prepare a reinforced composition.

*Articles and Applications*

Another aspect of the present invention provides the use of the polymer composition in an article.

The polymer composition can be desirably incorporated into articles, preferably shaped articles.

The article can notably be used in mobile electronics, LED packaging, electrical and electronic components (including, but not limited to, power unit components for computing, data-system and office equipment and surface mounted technology compatible connectors and contacts), medical device components; and electrical protection devices for mini-circuit breakers, contactors, switches and sockets), automotive components, and aerospace components (including, but not limited to, interior cabin components).

Due at least in part to its surprisingly improved acid resistance while having excellent dielectric performance and mechanical performance, the polymer composition described herein can be desirably integrated into mobile electronic device components.

The polymer composition may have a $D_k$ at 2.45GHz, measured according to ASTM D2520, of no more than 3.5, or no more than 3.4, or no more than 3.3, or no more than 3.25, or no more than 3.22, or no more than 3.2, or no more than 3.18, or no more than 3.15, or no more than 3.10, and/or a Dr at 2.45GHz, measured according to ASTM D2520, of at most 0.015, or at most 0.014, or at most 0.013, or at most 0.012, or at most 0.011, or at most 0.010, or at most 0.009, or at most 0.0087, or at most 0.0085, or at most 0.0082, or at most 0.008.

The polymer composition is particularly well suited for applications where the composition is overmolded onto a metal substrate that is subsequently anodized (e.g., antenna window).

The term "mobile electronic device" is intended to denote an electronic device that is designed to be conveniently transported and used in various locations. Representative examples of mobile electronic devices may be selected from the group consisting of a mobile electronic phone, a personal digital assistant, a laptop computer, a tablet computer, a radio, a camera and camera accessories, a wearable computing device (e.g., a smart watch, smart glasses and the like), a calculator, a music player, a global positioning system receiver, a portable game console and console accessories, a hard drive and other electronic storage devices.

Preferred mobile electronic devices include laptop computers, tablet computers, mobile electronic phones and wearable computing devices, e.g., watches.

Components of mobile electronic devices of interest herein include, but are not limited to, antenna windows, fitting parts, snap fit parts, mutually moveable parts, functional elements, operating elements, tracking elements, adjustment elements, carrier elements, frame elements, switches, connectors, cables, housings, and any other structural part other than housings as used in a mobile electronic devices, such as for example speaker parts. In some embodiments, the device component can be of a mounting component with mounting holes or other fastening device, including but not limited to, a snap fit connector between itself and another component of the mobile electronic device, including but not limited to, a circuit board, a microphone, a speaker, a display, a battery, a cover, a housing, an electrical or electronic connector, a hinge, a radio antenna, a switch, or a switchpad.

In some embodiments, the mobile electronic device can be at least a portion of an input device.

In some embodiments, the mobile electronic device component may also be a mobile electronic device housing. The "mobile electronic device housing" refers to one or more of the back cover, front cover, antenna housing, frame and/or backbone of a mobile electronic device. The housing may be a single article or comprise two or more components. A "backbone" refers to a structural component onto which other components of the device, such as electronics, microprocessors, screens, keyboards and keypads, antennas, battery sockets, and the like are mounted. The backbone may be an interior component that is not visible or only partially visible from the exterior of the mobile electronic device. The housing may provide protection for internal components of the device from impact and contamination and/or damage from environmental agents (such as liquids, dust, and the like). Housing components such as covers may also provide substantial or primary structural support for and protection against impact of certain components having exposure to the exterior of the device such as screens and/or antennas.

In some embodiments, the mobile electronic device housing is selected from the group consisting of a mobile phone housing, an antenna housing, a tablet housing, a laptop computer housing, a tablet computer housing or a watch housing.

In some embodiments, the mobile electronic device component may include, for example, a radio antenna. In this case, the radio antenna can be a WiFi antenna or an RFID antenna. In some such embodiments, at least a portion of the radio antenna is disposed on the polymer composition. Additionally or alternatively, at least a portion of the radio antenna can be displaced from the polymer composition.

Examples of automotive components include, but are not limited to, components in automotive electronic components, automotive lighting components (including, but not limited to, motor end caps, sensors, ECU housings, bobbins and solenoids, connectors, circuit protection/relays, actuator housings, Li-ion battery systems, and fuse boxes), traction motor and power electronic components (including, but not limited to, battery packs), electrical battery housings.

The article can be molded from the polymer composition by any process adapted to thermoplastics, e.g., extrusion, injection molding, blow molding, rotomolding, or compression molding.

The article may comprise a polymeric part which is overmolded over a metal part, wherein the polymeric part contains or is made from the polymer composition.

Preferred formation of the mobile electronic device component includes a suitable melt-processing method such as injection molding or extrusion molding of the polymer composition, injection molding being a preferred shaping method.

***Use of the polymer composition or article***

In some embodiments, the polymer composition or article can be used for manufacturing a mobile electronic device component, as described above.

In particular, the use of the polymer composition may be particularly suitable for mobile electronics device components where the composition is applied onto a metal substrate that is subsequently anodized (e.g., antenna window).

The use may include first overmolding, injection molding or transfer molding the polymer composition according to the invention onto a metal substrate to form an assembly, and then subjecting the assembly to anodization.

The metal substrate can be formed from a suitable material including, but not limited to, aluminum, 5052 aluminum, and/or aluminum alloy.

For example, the polymer composition may be insert molded or overmolded to an aluminum part to form the component of a mobile device.

The assembly including the metal substrate can be anodized using an anodizing agent including, but not limited to, chromic acid, phosphoric acid, sulfuric acid, oxalic acid, and/or boric acid. The specific anodizing agent and conditions that are used depend on the specific details of the application such as, for example, the type of metal being anodized.

**EXAMPLES**

The invention will now be described with reference to the following examples. The examples demonstrate the acid resistance, the dielectric performance and mechanical performance of the polymer compositions. As used in the Examples, "E" denotes an example embodiment of the present invention and "CE" denotes a counter-example.

*Raw Materials*

***• Polyamides (PA)***

In the examples, the polyamides PA-1 to PA-9 listed in TABLE 1 were used. Polymer compositions comprising a POf and a polyamide selected from PA-1 to PA-3 are according to the invention, while compositions containing a polyamide selected from PA-4 to PA-9 are counter-examples.

**TABLE 1**

| PA | Name | C/Amide molar ratio | Type of PA | Reference No | Source |
|---|---|---|---|---|---|
| PA-1 | PA10,T/10,I | 9 | Semi-Ar. (PPA) | Vicnyl 6100 | Kingfa |
| PA-2 | PA10,T | 9 | Semi-Ar. (PPA) | Vicnyl 700 | Kingfa |
| PA-3 | PA9,T | 8.5 | Semi-Ar. (PPA) | Genestar GC51010 | Kuraray |
| PA-4 | PA6,T/6,I | 7 | Semi-Ar (PPA) | Amodel® A-8000 | Solvay |
| PA-5 | PA6,10 | 8 | Aliph. | Radipol™ DC45 | Radici |
| PA-6 | PAMXD6 | 7 | Semi-Ar. (PArA) | Ixef 0000 | Solvay |
| PA-7 | PAPXD10 | 9 | Semi-Ar. (PArA) | Lexter 8900 | Mitsubishi Gas Chemical Company |
| PA-8 | PA10,10 | 10 | Aliph. | 92214382316 | Zibo Hyman Topbon Chemical Company |
| PA-9 | PA12 | 12 | Aliph. | Vestamid L1700 | Evonik |

***Functionalized Polyolefin ("$PO_f$")***

- Maleated polypropylene ("MA-PP"): maleic anhydride functionalized polypropylene copolymer, commercially obtained under the trade name Exxelor® PO 1015 from Exxon Mobil

### *Glass fiber ("GF")*

- Glass Fiber ("GF1"): low $D_k$/ $D_f$ round glass fiber, commercially obtained as CPIC CS(HL)301HP from Chongqing Polycomp International Corp.
- Glass Fiber ("GF2"): E-glass round glass fiber, commercially obtained as Nippon Electric Glass HP 3610
- Glass Fiber ("GF3"): S-1 glass round glass fiber, commercially obtained as Taishan S-1 HM435TM-10-3.0

### *Additive Package*

- 0.1 g/100g calcium stearate as Ceasit I (as lubricant) from Baerlocher + 0.2 g/100g Irganox® B1171 (as heat stabilizer) from BASF corporation + 0.3 g/100g Chimassorb 944 LD (as UV stabilizer) from BASF - total : 0.6 wt.%
- Optional colorant (typically 0.3 wt.%)

### *Compounding method*

Mixtures containing a polyamide (PA), the functionalized polyolefin ($PO_f$), the glass fiber (GF), and an additive package comprising the lubricant (Ceasit I), the UV stabilizer (Chimassorb 944 LD) and the heat stabilizer (Irganox® B1171) were melt-blended in the amounts set in **TABLES 2-7** below. The melt-blending was carried out using a Coperion® ZSK-26 co-rotating twinscrew extruder and subsequently molded according to **ASTM D3641.**

### *Test methods*

- $D_f$ and $D_k$ were measured according to **ASTM D2520** at 2.45 GHz. Measurements of $D_k$ and $D_f$ at were taken on injection molded, rectangular bars having dimensions of 3.2 mm thickness by 12.7 mm width by 125 mm length.
- Tensile modulus, strength, and strain were measured on 5 injection molded ASTM Type I tensile bars (total length of 165 mm, gauge length of 50 mm, testing section width of 12.7 mm, thickness of 3.2 mm) according to ASTM D638 using 0.2 in/min test speed to measure the tensile properties.
- Flexural modulus was measured on 5 injection molded, rectangular bars having dimensions of 3.2 mm thickness by 12.7 mm width by 125 mm length.
- ASTM un-notched Izod impact testing (value measured in ft-lb/in) was also performed according to **ASTM D256** using 5 injection molded, rectangular bars having dimensions of 3.2 mm thickness by 12.7 mm width by 125 mm length.
- ISO un-notched-Izod testing (value measured in $kJ/m^2$) was alternatively determined using **ISO 180** using 10 injection molded ISO type 1A bars (length of 80 $\pm$ 2 mm, width of 10 $\pm$ 0.2 mm, thickness of 4 $\pm$ 0.2 mm).
- Qualitative Acid Resistance:
  Molded specimens, typically ASTM Type I tensile bars, were submerged in 1 N sulfuric acid, 5 N sulfuric acid, and 5 N nitric acid solution at 80°C for 4 hr. The change in color was measured pre- and post- acid treatment using a spectrophotometer and quantified by $\Delta E_{94}$ (CIE94) only for the samples that were submerged in 1 N sulfuric acid. The following visual assessments were made on specimens that were submerged in 1 N sulfuric acid, 5 N sulfuric acid, and 5 N nitric acid. The specimens were visually assessed to determine if surface defects formed (light or white spots, light or white streaks, surface roughening, and/or other aesthetic defects that were discernible with the naked eye). Surface defects were classified as 'none', 'minor', or 'major' depending on if a single defect appeared or a combination of defects, respectively. Additionally, the specimens were visually assessed to determine if dimensional changes, i.e., swelling, occurred during the acid exposure. Dimensional changes were classified as 'none', 'minor', or 'major' depending on the observed severity, i.e., 'minor' would be classified as some slight swelling while maintaining the overall dimensional ratios of the parts with no warping of the parts' edges, and 'major' would be classified as more severe swelling with changes in the overall dimensional ratios, such as warping of the parts' edges.

Sample parameters are provided in **TABLES 2-7** in which: the "$PO_f$ weight ratio" refers to the ratio quantity: $100 \times \frac{W_{PO}}{W_{PO}+W_{PA}}$ , where $W_{PO}$ and $W_{PA}$ are, respectively, the weight of the $PO_f$ and PA in the sample. In order to

carry out the comparison, the $PO_f$ weight ratios in these examples were calculated based on the weight of the polyamide used in each blend, regardless whether the polyamide was a polyphthalamide having a C/Amide molar ratio > 8 or not.

**Example 1**

The present example demonstrates the improved dielectric properties, improved tensile elongation, and improved un-notched Izod (impact resistance) of specific PA+$PO_f$ blends.

Samples E1, E2, E3, CE4*, CE6* contained:

- 10 wt.% of maleated polypropylene (MA-PP) to achieve a $PO_f$ weight ratio of 14.4% in each blend;
- 30 wt.% of low $D_k$ round glass fibers;
- 0.6 wt.% of the additives package; and
- the remaining weight % being from a semi-aromatic polyamide selected from PA10,T/10,I (PA-1), PA10,T (PA-2), PA9,T (PA-3), PA6T/6I (PA-4) or PAMDX6 (PA-6) with a C/Amide ratio of 9, 9, 8.5, 7, and 7, respectively.

Samples CE1, CE2, CE3, CE4 and CE6 were similar to Samples E1, E2, E3, CE4*, CE6* except that they did not contain the maleated polypropylene.

Sample CE5* contained 10 wt.% of maleated polypropylene (MA-PP) to achieve a $PO_f$ weight ratio of 14.4% in the blend; 30 wt.% of low $D_k$ round glass fibers; 0.6 wt.% of the additives package; and the remainder of the weight being an aliphatic polyamide (PA-5): PA6,10 with a C/Amide ratio of 8. Sample CE5 was similar to Sample CE5* except that it did not contain the maleated polypropylene.

The results are displayed in **TABLES 2 & 3.**

Samples E1, E2, E3, CE4*, CE6* having a semi-aromatic polyamide and MA-PP with a $PO_f$ weight ratio of 14.4% had improved un-notched Izod (from 36 to 106% improvement), also improved tensile elongation (from 21 to 44%), and improved dielectric performance (both $D_k$ and Dr), relative to Samples CE1, CE2, CE3, CE4 and CE6 without MA-PP.

Sample CE5* having an aliphatic polyamide (C/Amide = 8) and comprising MA-PP with a $PO_f$ weight ratio of 14.4% had improved dielectric performance (both $D_k$ and $D_f$), however did not improve the tensile elongation and un-notched Izod, relative to Sample CE5 without MA-PP.

It is also noted that the blends in **TABLE 2** containing a polyamide with a C/Amide ratio greater than 8, with or without containing MA-PP, had a significantly improved acid resistance, whereas the polyamides with a C/Amide ratio ≤ 8 in **TABLE 3** had poor acid resistance, especially with nitric acid.

The improved acid resistance of the blends in **TABLE 2** was exemplified by low $\Delta E_{94}$ values ($\Delta E < 1$, preferably ≤ 0.28 ), indicating a minimal color shift, no appearance of surface defects, and no dimensional changes. On the contrary, the poor acid resistance of the blends in **TABLE 3** was exemplified by generally higher $\Delta E_{94}$ values (> 0.28, sometimes > 1), and the appearance of minor and major surface defects. The blends in **TABLE 3** still displayed satisfactory dimensional stability.

**TABLE 2**

| Sample No. | CE1 | E1 | CE2 | E2 | CE3 | E3 |
|---|---|---|---|---|---|---|
| PA# / type | PA-1 | | PA-2 | | PA-3 | |
| | Semi-Aromatic (PPA) | | Semi-Aromatic (PPA) | | Semi-Aromatic (PPA) | |
| Recurring unit | PA10,T/10,I | | PA10,T | | PA9,T | |
| C/Amide molar ratio | 9 | | 9 | | 8.5 | |
| GF1 Type | low $D_k$ round | | low $D_k$ round | | low $D_k$ round | |
| PA (wt.%) | 69.4 | 59.4 | 69.4 | 59.4 | 69.4 | 59.4 |
| MA-PP (wt.%) | - | 10 | - | 10 | - | 10 |
| $PO_f$ weight ratio (%) | - | 14.4 | - | 14.4 | - | 14.4 |
| GF1 (wt.%) | 30 | 30 | 30 | 30 | 30 | 30 |
| Additive Package (wt.%) | 0.6 | 0.6 | 0.6 | 0.6 | 0.6 | 0.6 |
| Dielectric Performance | | | | | | |
| $D_k$ at 2.45 GHz | 3.20 | **3.05** | 3.17 | **3.04** | 3.19 | **3.01** |
| $D_f$ at 2.45 GHz | 0.00972 | **0.00822** | 0.00870 | **0.00750** | 0.00854 | **0.00715** |

(continued)

| Mechanical Performance | | | | | | |
|---|---|---|---|---|---|---|
| Tensile Modulus [ksi] | 1280 | 1190 | 1280 | 1200 | 1230 | 1130 |
| Tensile Strength [psi] | 23900 | 23600 | 24200 | 22700 | 18100 | 21100 |
| Tensile Elongation [%] | 2.5 | **3.6** | 2.9 | **3.6** | 2.1 | **2.8** |
| *% Change in Elongation* | - | ***+44%*** | - | ***+24%*** | - | ***+33%*** |
| Flexural Modulus [ksi] | 1240 | 1120 | 1140 | 1080 | 1190 | 1080 |
| ASTM Un-Notched Izod [ft-lb/in] | 11.9 | **24.5** | 15.9 | **23.8** | 8.1 | **12.4** |
| *% Change in unotched Izod* | - | ***+106%*** | - | ***+50%*** | - | ***+53%*** |
| Complete Break # breaks | 5 | 5 | 5 | 5 | 5 | 5 |
| Qualitative Acid Resistance - 1 N Sulfuric Acid | | | | | | |
| $\Delta E_{94}$ (CIE94) | 0.04 | 0.05 | 0.05 | 0.10 | 0.08 | 0.28 |
| Surface Defects | None | None | None | None | None | None |
| Dimensional Changes | None | None | None | None | None | None |
| Qualitative Acid Resistance - 5 N Sulfuric Acid | | | | | | |
| Surface Defects | None | None | None | None | None | None |
| Dimensional Changes | None | None | None | None | None | None |
| Qualitative Acid Resistance - Nitric Acid | | | | | | |
| Surface Defects | None | None | None | None | None | None |
| Dimensional Changes | None | None | None | None | None | None |

**TABLE 3**

| Sample No. | CE4 | \| CE4* | CE5 | \| CE5* | CE6 | \| CE6* |
|---|---|---|---|---|---|---|
| PA# / type | PA-4 | | PA-5 | | PA-6 | |
| | Semi-Aromatic (PPA) | | Aliphatic | | Semi-Aromatic | |
| PA Recurr. unit | PA6T/6I | | PA6,10 | | PAMXD6 | |
| C/Amide molar ratio | 7 | | 8 | | 7 | |
| GF1 Type | low $D_k$ round | | low $D_k$ round | | low $D_k$ round | |
| PA (wt.%) | 69.4 | 59.4 | 69.4 | 59.4 | 69.4 | 59.4 |
| MA-PP (wt.%) | - | 10 | - | 10 | - | 10 |
| $PO_f$ weight ratio (%) | - | 14.4 | - | 14.4 | - | 14.4 |
| GF (wt.%) | 30 | 30 | 30 | 30 | 30 | 30 |
| Additive Package (wt.%) | 0.6 | 0.6 | 0.6 | 0.6 | 0.6 | 0.6 |
| Dielectric Performance | | | | | | |
| $D_k$ at 2.45 GHz | 3.45 | 3.22 | 3.09 | 2.99 | 3.46 | 3.27 |
| $D_f$ at 2.45 GHz | 0.0011 | 0.0095 | 0.0093 | 0.0081 | 0.0083 | 0.0072 |
| Mechanical Performance | | | | | | |
| Tensile Modulus [ksi] | 1520 | 1350 | 1220 | 1150 | 1650 | 1440 |
| Tensile Strength [psi] | 21700 | 23100 | 23000 | 20900 | 28800 | 28400 |
| Tensile Elongation [%] | 1.9 | **2.3** | 4.4 | 4.5 | 2.1 | **3.0** |
| *% Change in Elongation* | - | ***+21%*** | - | ***+2%*** | - | ***+43%*** |

(continued)

| Mechanical Performance | | | | | | |
|---|---|---|---|---|---|---|
| Flexural Modulus [ksi] | 1340 | 1300 | 1120 | 1050 | 1660 | 1360 |
| ASTM Un-Notched Izod [ft-lb/in] | 7.9 | 10.5 | 28.2 | 27.6 | 9.7 | 15.3 |
| *% Change in Un-Notched Izod* | - | ***+34%*** | - | ***-2%*** | - | ***+58%*** |
| Complete Break # breaks | 5 | 5 | 5 | 5 | 5 | 5 |
| Qualitative Acid Resistance - 1 N Sulfuric Acid | | | | | | |
| $\Delta E_{94}$ (CIE94) | 0.59 | 1.02 | 0.20 | 0.29 | 1.49 | 1.29 |
| Surface Defects | Minor | Minor | Major | Major | Major | Major |
| Dimensional Changes | None | None | None | None | None | None |
| Qualitative Acid Resistance - 5 N Sulfuric Acid | | | | | | |
| Surface Defects | Minor | Minor | Major | Major | Major | Major |
| Dimensional Changes | None | None | None | None | None | None |
| Qualitative Acid Resistance - 5 N Nitric Acid | | | | | | |
| Surface Defects | Minor | Minor | Major | Major | Major | Major |
| Dimensional Changes | None | None | None | None | None | None |

***Example 2***

The present example demonstrates the improved dielectric properties, improved tensile elongation, and improved un-notched Izod (impact resistance) of specific PA+$PO_f$ blends with low $D_k$ round glass fibers and various $PO_f$ weight ratios.

Samples E1$^b$, E1$^c$, E1$^d$ contained:

- a maleated polypropylene (MA-PP) in an amount of 2.5 wt.%, 5 wt.% and 7.5 wt.% to achieve a $PO_f$ weight ratio of 3.7%; 7.8%; and 12.1%, respectively, in the blends;
- 30 wt.% of low $D_k$ round glass fibers;
- 0.6 wt.% of the additives package; and
- the remaining weight % being from the semi-aromatic polyamide (PA-1): PA10,T/10,I with a C/Amide ratio of 9.

Samples E1$^b$ ($PO_f$ weight ratio of 3.7%), E1$^c$ (POr weight ratio of 7.8%), and E1$^d$ ($PO_f$ weight ratio of 12.1%) are compared in **TABLE 4** with Sample CE1 (no MA-PP) and Sample E1 ($PO_f$ weight ratio of 14.4%), previously described in Example 1.

As shown in **TABLE 4**, both dielectric $D_k$ and $D_f$ values at 2.45 GHz (ASTM D2520) decreased with the addition to PA-1 of MA-PP with a $PO_f$ weight ratio of 14.4%.

Moreover, the tensile elongation with blends of PA10,T/10,I (PA-1) and MA-PP was steadily increasing with increasing $PO_f$ weight ratio from 3.7% to 14.4%.

As illustrated in **FIG. 1** which plots the Un-notched Izod impact values with respect to various $PO_f$ weight ratios of from 0 to 14.4% in the PA-1/MA-PP blend Samples E1$^b$, E1$^c$, E1$^d$, E1 in comparison to the sample CE1 without MA-PP, the Un-notched Izod impact value steadily increased with increasing $PO_f$ weight ratio until it leveled off after a $PO_f$ weight ratio of 12.7%, corresponding to a +107% improvement (compared to CE1).

As illustrated in **FIG. 2** which plots the dielectric constant $D_k$ values at 2.45 GHz with respect to various $PO_f$ weight ratios of from 0 to 14.4% in the PA-1/MA-PP blend Samples E1$^b$, E1$^c$, E1$^d$, E1 in comparison to the sample CE1 without MA-PP, the $D_k$ steadily decreased with increasing $PO_f$ weight ratios.

**TABLE 4**

| Sample No. | CE1 | E1$^b$ | E1$^c$ | E1$^d$ | E1 |
|---|---|---|---|---|---|
| PA# / type | PA-1 | | | | |
| | Semi-Aromatic (PPA) | | | | |

(continued)

| Sample No. | CE1 | E1[b] | E1[c] | E1[d] | E1 |
|---|---|---|---|---|---|
| PA recurr. unit | PA10,T/10,I | | | | |
| C/Amide molar ratio | 9 | | | | |
| GF1 Type | low $D_k$ round | | | | |
| PA (wt.%) | 69.4 | 66.9 | 64.4 | 61.9 | 59.4 |
| MA-PP (wt.%) | - | 2.5 | 5 | 7.5 | 10 |
| $PO_f$ weight ratio (%) | - | **3.7** | **7.8** | **12.1** | **14.4** |
| GF (wt.%) | 30 | 30 | 30 | 30 | 30 |
| Additive Package (wt.%) | 0.6 | 0.6 | 0.6 | 0.6 | 0.6 |
| Dielectric Performance | | | | | |
| $D_k$ at 2.45 GHz | 3.20 | 3.170 | 3.136 | 3.072 | 3.05 |
| $D_f$ at 2.45 GHz | 0.00972 | 0.0097 | 0.0093 | 0.0876 | 0.00822 |
| Mechanical Performance | | | | | |
| Tensile Modulus [ksi] | 1280 | 1270 | 1250 | 1220 | 1190 |
| Tensile Strength [psi] | 23900 | 25200 | 24700 | 24200 | 23600 |
| Tensile Elongation [%] | 2.5 | **3.1** | **3.4** | **3.5** | **3.6** |
| *% Change in Elongation* | - | ***+24%*** | ***+36%*** | ***+40%*** | ***+44%*** |
| Flexural Modulus [ksi] | 1240 | 1192 | 1157 | 1115 | 1120 |
| ASTM Un-notched Izod [ft-lb/in] | 11.9 | 17.0 | 20.9 | 24.6 | 24.5 |
| *% Change in Un-notched Izod* | - | ***+43%*** | ***+76%*** | ***+107%*** | ***+106%*** |
| Complete Break # breaks | 5 | 5 | 5 | 5 | 5 |
| Qualitative Acid Resistance - 1 N Sulfuric Acid | | | | | |
| $\Delta E_{94}$ (CIE94) | 0.04 | *nd* | *nd* | *nd* | 0.05 |
| Surface Defects | None | *nd* | *nd* | *nd* | None |
| Dimensional Changes | None | *nd* | *nd* | *nd* | None |
| Qualitative Acid Resistance - 5 N Sulfuric Acid | | | | | |
| Surface Defects | None | *nd* | *nd* | *nd* | None |
| Dimensional Changes | None | *nd* | *nd* | *nd* | None |
| Qualitative Acid Resistance - 5 N Nitric Acid | | | | | |
| Surface Defects | None | *nd* | *nd* | *nd* | None |
| Dimensional Changes | None | *nd* | *nd* | *nd* | None |
| *nd : not determined* | | | | | |

**Example 3**

The present example demonstrates the improved dielectric properties, improved tensile elongation, and improved un-notched Izod (impact resistance) of a specific PA+POr blend with E-glass round fibers.

Sample E7 contained:

- maleated polypropylene (MA-PP) in an amount of 10 wt.% to achieve a $PO_f$ weight ratio of 14.4%;
- 30 wt.% of E-glass round fibers;
- 0.6 wt.% of the additives package; and
- the remaining weight % being from the semi-aromatic polyamide (PA-1): PA10,T/10,I with a C/Amide ratio of 9.

Sample CE7 was similar to Sample E7 except that it did not contain the maleated polypropylene.

The testing results are displayed in **TABLE 5.**

From **TABLE 5**, it is noted that, using E-glass fiber, the tensile elongation of Sample E7 with MA-PP ($PO_f$ weight ratio =14.4%) was increased compared to CE7 without MA-PP.

However, the relative improvement (28% increase) in the tensile elongation observed with Sample E7 using E-glass round fibers was not as good as to what was obtained (44% increase) with Sample E1 using low $D_k$ round glass fibers in Example 1 with the same $PO_f$ weight ratio.

Additionally, the Un-notched Izod value of Sample E7 with MA-PP ($PO_f$ weight ratio =14.4%; E-glass round fibers) was improved compared to what was obtained without MA-PP in Sample CE7.

However, the relative improvement (60% increase) in Un-notched Izod values observed with Sample E7 using E-glass round fibers was not as good as to what was obtained (106% increase) with Sample E1 using low $D_k$ round glass fibers in Example 1 with the same $PO_f$ weight ratio.

**TABLE 5**

| Sample No. | CE7 | E7 |
|---|---|---|
| PA# / type | PA-1 | |
| | Semi-Aromatic (PPA) | |
| PA Recurr. unit | PA10,T/10,I | |
| **C/Amide** molar ratio | **9** | |
| GF2 Type | E-Glass round | |
| PA (wt.%) | 69.4 | 59.4 |
| MA-PP (wt.%) | - | 10 |
| $PO_f$ weight ratio (%) | - | 14.4 |
| GF (wt.%) | 30 | 30 |
| Additive Package (wt.%) | 0.6 | 0.6 |
| Dielectric Performance | | |
| $D_k$ at 2.45 GHz | *nd* | *nd* |
| $D_f$ at 2.45 GHz | *nd* | *nd* |
| Mechanical Performance | | |
| Tensile Modulus [ksi] | 1430 | 1340 |
| Tensile Strength [psi] | 25400 | 24500 |
| Tensile Elongation [%] | 2.5 | 3.2 |
| *% Change in Elongation* | - | *+**28%*** |
| Flexural Modulus [ksi] | 1380 | 1240 |
| ASTM Un-notched Izod [ft-lb/in] | 13.3 | 21.3 |
| *% Change in unotched Izod* | - | ***+60%*** |
| Complete Break # breaks | 5 | 5 |
| *nd : not determined* | | |

**Example 4**

The present example demonstrates the improved dielectric properties, improved tensile elongation, and improved un-notched Izod value of a specific PA+$PO_f$ blend using high modulus glass fibers (S-1 Glass).

Sample E8 contained:

- maleated polypropylene (MA-PP) in an amount of 10 wt.% to achieve a $PO_f$ weight ratio of 14.4% in the blend;
- 30 wt.% of S1-glass round fibers;

- 0.6 wt.% of the additives package; and
- the remaining weight % being from the semi-aromatic polyamide (PA-1): PA10,T/10,I with a C/Amide ratio of 9.

Sample CE8 was similar to Sample E8 except that it did not contain the maleated polypropylene.

The testing results are displayed in **TABLE 6.**

**TABLE 6**

| Sample No. | CE8 | E8 |
|---|---|---|
| PA# / type | PA-1 | |
| | Semi-Aromatic (PPA) | |
| PA Recurr. unit | PA10,T/10,I | |
| C/Amide molar ratio | 9 | |
| GF3 Type | S1-Glass round | |
| PA (wt.%) | 69.4 | 59.4 |
| MA-PP (wt.%) | - | 10 |
| $PO_f$ weight ratio (%) | - | 14.4 |
| GF3 (wt.%) | 30 | 30 |
| Additive Package (wt.%) | 0.6 | 0.6 |
| Dielectric Performance | | |
| $D_k$ at 2.45 GHz | *nd* | *nd* |
| $D_f$ at 2.45 GHz | *nd* | *nd* |
| Mechanical Performance | | |
| Tensile Modulus [ksi] | 1552 | 1450 |
| Tensile Strength [psi] | 28000 | 28000 |
| Tensile Elongation [%] | 2.6 | 3.2 |
| *% Change in Elongation* | - | ***+23%*** |
| Flexural Modulus [ksi] | 1411 | 1376 |
| ISO Unotched Izod [kJ/m$^2$] | 53 | 85 |
| *% Change in unotched Izod* | - | ***+60%*** |
| Complete Break # breaks | 10 | 10 |
| *nd : not determined* | | |

From **TABLE 6,** it was observed that the ISO un-notched Izod impact value with $PO_f$ =14.4% with S1-glass round fibers in Sample E8 was again improved compared to what was obtained with no MA-PP in the CE8 (+60%).

The improvement (60% increase) observed for the ISO Un-notched Izod value with Sample E8 (POr =14.4%: S1-glass round fibers) was equivalent to the improvement (60%) in the ASTM un-notched Izod impact value observed with Sample E7 ($PO_f$ =14.4%: E-glass round fibers).

Moreover, the relative Un-notched Izod impact improvement (60% increase) observed with Sample E8 with S1-glass round fibers was not as good as to what was obtained (106% increase) in the PA-1/MA-PP blend Sample E1 with low $D_k$ round glass fibers in Example 1 with the same polyamide PA-1.

The improvement (23% increase) observed for the tensile elongation value with sample E8 ($PO_f$ =14.4%: S1-glass round fibers) was slightly less than the improvement (28% increase) observed with Sample E7 ($PO_f$ =14.4%: E-glass round fibers).

Moreover, the improvement (23%) observed for the tensile elongation value with Sample E8 with S1-glas round fibers was not as good as to what was obtained (44% increase) in the PA-1/MA-PP blend Sample E1 with low $D_k$ round glass fibers in Example 1 with the same polyamide PA-1.

**Example 5**

Samples CE9*, CE10*, CE11* contained:

- 10 wt.% of maleated polypropylene (MA-PP) to achieve a $PO_f$ weight ratio of 14.4% in the blend;
- 30 wt.% of low $D_k$ round glass fibers;
- 0.6 wt.% of the additives package; and

the remaining weight % being from a semi-aromatic polyamide (PA-7): PAPXD10, or an aliphatic polyamide: PA10,10 (PA-8) and PA12 (PA-9), with a C/Amide ratio of 9, 10 and 12, respectively.

Samples CE9, CE10 and CE11 were similar to Samples CE9*, CE10*, CE11*, except that they did not contain the maleated polypropylene.

As shown in **TABLE 7**, both dielectric $D_k$ and $D_f$ values at 2.45 GHz decreased with the addition of MA-PP in Samples CE9*, CE10*, CE11* with a $PO_f$ weight ratio of 14.4%.

From **TABLE 7**, it was observed that the ASTM un-notched Izod impact and the tensile elongation with $PO_f$ =14.4% with low Dk glass round fibers in Sample CE9* were again improved (40% and 25% improvement, respectively) compared to what is obtained with no MA-PP in the CE9.

On the other end, the ASTM un-notched Izod impact and the tensile elongation with $PO_f$ =14.4% with low Dk glass round fibers in Sample CE10* were not improved or slightly improved (0% and 8% improvement, respectively) compared to what is obtained with no MA-PP in the CE10.

**TABLE 7**

| Sample No. | CE9 | \| CE9* | CE10 | CE10* | CE11 | CE11* |
|---|---|---|---|---|---|---|
| PA# / type | PA-7 | | PA-8 | | PA-9 | |
| | Semi-Aromatic | | Aliphatic | | Aliphatic | |
| PA Recurr. unit | PAPXD10 | | PA10,10 | | PA12 | |
| C/Amide ratio | 9 | | 10 | | 12 | |
| GF1 Type | low $D_k$ round | | low $D_k$ round | | low $D_k$ round | |
| PA (wt.%) | 69.4 | 59.4 | 69.4 | 59.4 | 69.40 | 59.4 |
| MA-PP (wt.%) | - | 10 | - | 10 | - | 10 |
| $PO_f$ weight ratio (%) | - | 14.4 | - | 14.4 | - | 14.4 |
| GF1 (wt.%) | 30 | 30 | 30 | 30 | 30 | 30 |
| Additive Package (wt.%) | 0.6 | 0.6 | 0.6 | 0.6 | 0.6 | 0.6 |
| Dielectric Performance | | | | | | |
| $D_k$ at 2.45 GHz | 3.255 | 3.097 | 2.984 | 2.926 | 2.918 | 2.858 |
| $D_f$ at 2.45 GHz | 0.0102 | 0.0089 | 0.0094 | 0.0086 | 0.0106 | 0.0094 |
| Mechanical Performance | | | | | | |
| Tensile Modulus [ksi] | 1310 | 1250 | 1090 | 1040 | 922 | 935 |
| Tensile Strength [psi] | 25100 | 24600 | 20000 | 18200 | 15600 | 13400 |
| Tensile Elongation [%] | 2.8 | 3.5 | 5.2 | 5.6 | 5.1 | 3.5 |
| *% Change in Elongation* | - | ***+25%*** | - | ***+8%*** | - | ***-31%*** |
| Flexural Modulus [ksi] | *nd* | *nd* | *nd* | *nd* | *nd* | *nd* |
| ASTM Un-Notched Izod [ft-lb/in] | 10.6 | 14.8 | 25.5 | 25.4 | 16.5 | 11.7 |
| % Change in Un-Notched Izod | - | ***+40%*** | - | ***0%*** | - | ***-29%*** |
| Complete Break # breaks | 5 | 5 | 5 | 5 | 5 | 5 |
| Qualitative Acid Resistance - 5 N Sulfuric Acid | | | | | | |
| Surface Defects | Minor | Minor | Minor | Minor | None | None |

(continued)

| | | | | | | |
|---|---|---|---|---|---|---|
| Qualitative Acid Resistance - 5 N Sulfuric Acid | | | | | | |
| Dimensional Changes | None | None | None | None | None | None |
| Qualitative Acid Resistance - 5 N Nitric Acid | | | | | | |
| Surface Defects | Major | Major | Major | Major | Minor | Minor |
| Dimensional Changes | None | None | Minor | Minor | None | None |

The blends CE11, CE11* in **TABLE 7** containing an aliphatic polyamide (PA12) with a C/Amide ratio of 12, with or without containing MA-PP, had an improved acid resistance in 5N Nitric acid, whereas the blends CE5*, CE9*, CE10* containing an aliphatic polyamide with a C/Amide ratio of from 8 to 10 had poorer acid resistance in 5N Nitric acid. However the blend C11* with PA12 had much the worse performance in mechanical properties compared to the blends CE5*, CE10*. The un-notched Izod impact (according to ASTM D256) and the tensile elongation with $PO_f$ =14.4% with low $D_k$ glass round fibers in Sample CE11* were not improved compared to what was obtained with no MA-PP in the CE11, with about 30% loss in these two properties.

The enhancement in tensile elongation and impact properties, particularly Un-Notched Izod, and decrease in dielectric properties, $D_k$ and $D_f$, was observed for all of the semi-aromatic polyamides, and particularity the polyphthamides, that were investigated.

It is also noted that the blends in **TABLE 7** containing an aliphatic polyamide with a C/Amide ratio greater than 8 (a C/Amide ratio of 10, 12), with or without containing MA-PP, had an improved acid resistance in 5N sulfuric acid, compared to blends CE5, CE5* containing the aliphatic polyamide with a C/Amide ratio ≤ 8 in **TABLE 3** with a very poor acid resistance.

While observing improvement on some mechanical properties, the polymer compositions in **TABLES 3 and 7** containing semi-aromatic polyamides (MXD6, PXD10) which were not a polyphthalamide, a polyphthalamide (PA6T/6I) having a C/Amide molar ratio of 7 (at most 8), and aliphatic polyamides (PA6,10; PA10,10; PA12) regardless of their C/Amide ratio showed poorer performance in acid resistance compared to the polymer compositions in **TABLES 2 and 4** containing the polyphthalamides (PA10,T/10,I; PA10,T; PA9,T)) having a C/Amide molar ratio greater than 8.

Hence specific polyphthalamides (PA10,T/10,I ; PA10,T ; PA9,T) demonstrated much reduced cosmetic change following exposure to acidic media. The data suggests that the carbon-to-amide ratio (C/CONH) may play a role in acid resistance, in particular in 1N and 5N sulfuric acid, such that polyphthalamides with a C/Amide molar ratio greater than 8 demonstrated superior acid resistance compared to aliphatic polyamides and semi-aromatic polyamides including polyphthalamides with C/Amide ratio ≤ 8. Aromaticity of the polyamide did not appear to be a factor in the retention of cosmetic appearance following acid exposure, i.e., semi-aromatic polyamides and aliphatic polyamides with C/Amide ratio ≤ 8 all demonstrated varying degrees of cosmetic defect formation.

Overall in the above examples, significant improvement was observed in the tensile elongation and impact properties (Un-Notched Izod), while allowing for limited cosmetic change and limited dimensional changes following acid exposure. Additionally, the dielectric properties, $D_k$ and $D_f$, decreased upon the incorporation of MA-PP into the polyphthalamides (PA10,T/10,I; PA10,T; PA9,T)) having a C/Amide molar ratio greater than 8.

## Claims

**1.** A polymer composition comprising:

- a functionalized polyolefin,
- a polyamide selected from polyphthalamides having a carbon-to-amide molar ratio greater than 8,
- a glass fiber, and
- a functionalized polyolefin ($PO_f$) weight ratio of more than 0% and at most 27%,

wherein

- the $PO_f$ weight ratio is given by the formula: $100 \times \frac{W_{PO}}{W_{PO}+W_{PA}}$, and
- $W_{PA}$ and $W_{PO}$ are, respectively, the weight of the polyamide and the functionalized polyolefin in the polymer composition;

wherein

- the functionalized polyolefin comprises recurring units $R_{PO1}$ and $R_{PO2}$ that are represented by the following formulae, respectively:

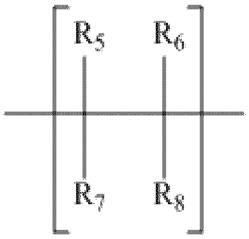 (6) and 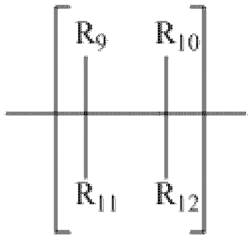 (7),

wherein $R_5$ to $R_8$ are independently selected from the group consisting of a hydrogen and an alkyl group represented by the formula $-(CH_2)_m-CH_3$, where m is an integer from 0 to 5; $R_9$ to $R_{12}$ are independently selected from the group consisting of a hydrogen, an alkyl group represented by the formula $-(CH_2)_{m'}-CH_3$, where m, is an integer from 0 to 5, and a reactive group that reacts with an amine group or a carboxylic acid group of the polyamide; and wherein at least one of $R_9$ to $R_{12}$ is a reactive group,

- the functionalized polyolefin comprises from 0.05 mol% to 1.5 mol% of recurring unit $R_{PO2}$;
- the functionalized polyolefin is selected from the group consisting of a functionalized polypropylene, a functionalized polymethylpentene, a functionalized polybutene-1, a functionalized polyisobutylene, a functionalized ethylene propylene rubber, and a functionalized ethylene propylene diene monomer rubber, and
- the glass fiber content in the polymer composition is from 20 wt.% to 55 wt%, relative to the total weight of the polymer composition.

**2.** The polymer composition of claim 1, wherein the functionalized polyolefin polymer is a functionalized polypropylene.

**3.** The polymer composition of either of claims 1 or 2, wherein the functionalized polyolefin is functionalized with a reactive group selected from the group consisting of a maleic anhydride, epoxide, isocyanate, and acrylic acid, preferably the reactive group is maleic anhydride.

**4.** The polymer composition of any one of claims 1 to 3, which excludes :

- a semi-aromatic polyamide or polyphthalamide obtained by polycondensation between diacid and diamine monomers, wherein one monomer is aliphatic and has 6 carbon atoms or less; and/or
- a polyphthalamide having a C/Amide molar ratio of at most 8; and/or
- a semi-aromatic polyamide which is not a polyphthalamide; and/or
- an aliphatic polyamide; and/or
- any polyamide having a number average molecular weight of less than 1600.

**5.** The polymer composition of any one of claims 1 to 4, wherein the polyamide is at least one polyphthalamide having a carbon-to-amide molar ratio of at least 8.1, or at least 8.2, or at least 8.3, or at least 8.4, or at least 8.5, or at least 9.

**6.** The polymer composition of any one of claims 1 to 4, wherein the polyamide is a polyphthalamide selected from the group consisting of PA10,T/10,I; PA10,T; PA9,T; and any combination thereof.

**7.** The polymer composition of any one of claims 1 to 6, wherein the functionalized polyolefin is a polypropylene functionalized with a maleic anhydride as reactive group.

**8.** The polymer composition of any one of claims 1 to 7, wherein the glass fiber has a dielectric constant of 4.0 to 5.5 at a frequency of 1 MHz measured according to ASTM D150 and/or has a tensile modulus of at least 76 GPa as measured according to ASTM D2343.

**9.** The polymer composition of any one of claims 1 to 8, wherein the glass fiber concentration in the polymer composition is from 25 wt.% to 55 wt.%, preferably from 30 wt.% to 50 wt.%, based on the total weight of the polymer composition.

**10.** The polymer composition of any one of claims 1 to 9, wherein the functionalized polyolefin concentration in the polymer composition is from 2 wt.% to 20 wt.%, preferably from 2.5 wt.% to 15 wt.%, based on the total weight of the polymer composition.

**11.** The polymer composition of any one of claims 1 to 10, wherein the polyamide concentration in the polymer

composition is from 40 wt.% to 78 wt.%, preferably from 45 wt. % to 77 wt.%, more preferably from 50 wt. % to 70 wt.%, based on the total weight of the polymer composition.

**12.** The polymer composition of any one of claims 1 to 11, wherein the polymer composition has a $D_k$ at 2.45GHz, measured according to ASTM D2520, of no more than 3.18, preferably no more than 3.15, more preferably no more than 3.10, and/or a Dr at 2.45GHz, measured according to ASTM D2520, of at most 0.009.

**13.** The polymer composition of any one of claims 1 to 12, wherein the $PO_f$ weight ratio in the polymer composition is from 3 % to 20 %, preferably from 3% to 15%.

**14.** A mobile electronic device component comprising the polymer composition of any one of claims 1 to 13, preferably, the mobile electronic device component being an antenna such as a mobile electronic antenna, an antenna window, an antenna housing, or a mobile electronic housing.

**15.** A method for making a mobile electronic device component, comprising : first overmolding, injection molding or transfer molding the polymer composition according to any one of claims 1 to 13 onto a metal substrate to form an assembly, and then subjecting the assembly to anodization.

## Patentansprüche

**1.** Polymerzusammensetzung umfassend:

- ein funktionalisiertes Polyolefin,
- ein Polyamid ausgewählt aus Polyphthalamiden mit einem Kohlenstoff-zu-Amid-Molverhältnis von größer als 8,
- eine Glasfaser und
- ein Gewichtsverhältnis von funktionalisiertem Polyolefin ($PO_f$) von mehr als 0 % und höchstens 27%, wobei
- das $PO_f$-Gewichtsverhältnis gegeben ist durch die Formel: $100 \times \frac{W_{PO}}{W_{PO}+W_{PA}}$ , und
- $W_{PA}$ und $W_{PO}$ das Gewicht des Polyamids bzw. des funktionalisierten Polyolefins in der Polymerzusammensetzung sind;

wobei
- das funktionalisierte Polyolefin Wiederholungseinheiten $R_{PO1}$ und $R_{PO2}$ umfasst, die durch die folgenden Formeln dargestellt werden:

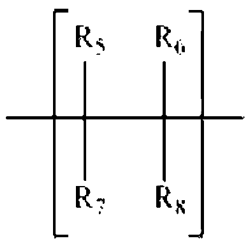
(6) und
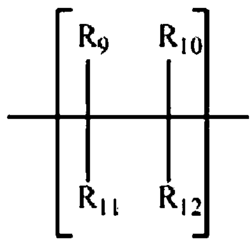
(7),

wobei $R_5$ bis $R_8$ unabhängig ausgewählt sind aus der Gruppe bestehend aus einem Wasserstoff und einer Alkylgruppe dargestellt durch die Formel $-(CH_2)_m-CH_3$, wobei m eine ganze Zahl von 0 bis 5 ist; $R_9$ bis $R_{12}$ unabhängig ausgewählt sind aus der Gruppe bestehend aus einem Wasserstoff, einer Alkylgruppe dargestellt durch die Formel $-(CH_2)_{m'}-CH_3$, wobei m eine ganze Zahl von 0 bis 5 ist, und einer reaktiven Gruppe, die mit einer Amingruppe oder einer Carbonsäuregruppe des Polyamids reagiert; und wobei wenigstens eines von $R_9$ bis $R_{12}$ eine reaktive Gruppe ist,
- das funktionalisierte Polyolefin von 0,05 Mol-% bis 1,5 Mol-% an Wiederholungseinheit $R_{PO2}$ umfasst;
- das funktionalisierte Polyolefin ausgewählt ist aus der Gruppe bestehend aus einem funktionalisierten Polypropylen, einem funktionalisierten Polymethylpenten, einem funktionalisierten Polybuten-1, einem funktionalisierten Polyisobutylen, einem funktionalisierten Ethylen-Propylen-Kautschuk und einem funktionalisierten Ethylen-Propylen-Dien-Monomerkautschuk, und
- der Glasfasergehalt in der Polymerzusammensetzung 20 Gew.-% bis 55 Gew.-%, bezogen auf das Gesamtgewicht der Polymerzusammensetzung, beträgt.

2. Polymerzusammensetzung nach Anspruch 1, wobei das funktionalisierte Polyolefinpolymer ein funktionalisiertes Polypropylen ist.

3. Polymerzusammensetzung nach einem der Ansprüche 1 oder 2, wobei das funktionalisierte Polyolefin mit einer reaktiven Gruppe ausgewählt aus der Gruppe bestehend aus einem Maleinsäureanhydrid, Epoxid, Isocyanat und Acrylsäure funktionalisiert ist, wobei die reaktive Gruppe vorzugsweise Maleinsäureanhydrid ist.

4. Polymerzusammensetzung nach einem der Ansprüche 1 bis 3, die ausschließt:

- ein halbaromatisches Polyamid oder Polyphthalamid, erhalten durch Polykondensation zwischen Disäure- und Diaminmonomeren, wobei ein Monomer aliphatisch ist und 6 Kohlenstoffatome oder weniger aufweist; und/oder
- ein Polyphthalamid mit einem C/Amid-Molverhältnis von höchstens 8; und/oder
- ein halbaromatisches Polyamid, das kein Polyphthalamid ist; und/oder
- ein aliphatisches Polyamid; und/oder
- jedes Polyamid mit einem anzahlgemittelten Molekulargewicht von weniger als 1600.

5. Polymerzusammensetzung nach einem der Ansprüche 1 bis 4, wobei das Polyamid wenigstens ein Polyphthalamid mit einem Kohlenstoff-zu-Amid-Molverhältnis von wenigstens 8,1 oder wenigstens 8,2 oder wenigstens 8,3 oder wenigstens 8,4 oder wenigstens 8,5 oder wenigstens 9 ist.

6. Polymerzusammensetzung nach einem der Ansprüche 1 bis 4, wobei das Polyamid ein Polyphthalamid ausgewählt aus der Gruppe bestehend aus PA10,T/10,I; PA10,T; PA9,T; und einer beliebigen Kombination davon ist.

7. Polymerzusammensetzung nach einem der Ansprüche 1 bis 6, wobei das funktionalisierte Polyolefin ein mit einem Maleinsäureanhydrid als reaktive Gruppe funktionalisiertes Polypropylen ist.

8. Polymerzusammensetzung nach einem der Ansprüche 1 bis 7, wobei die Glasfaser eine Dielektrizitätskonstante von 4,0 bis 5,5 bei einer Frequenz von 1 MHz, gemessen gemäß ASTM D150, aufweist und/oder einen Zugmodul von wenigstens 76 GPA, gemessen gemäß ASTM D2343, aufweist.

9. Polymerzusammensetzung nach einem der Ansprüche 1 bis 8, wobei die Glasfaserkonzentration in der Polymerzusammensetzung von 25 Gew.-% bis 55 Gew.-%, vorzugsweise von 30 Gew.-% bis 50 Gew.-%, bezogen auf das Gesamtgewicht der Polymerzusammensetzung, beträgt.

10. Polymerzusammensetzung nach einem der Ansprüche 1 bis 9, wobei die Konzentration von funktionalisiertem Polyolefin in der Polymerzusammensetzung von 2 Gew.-% bis 20 Gew.-%, vorzugsweise von 2,5 Gew.-% bis 15 Gew.-%, bezogen auf das Gesamtgewicht der Polymerzusammensetzung, beträgt.

11. Polymerzusammensetzung nach einem der Ansprüche 1 bis 10, wobei die Polyamidkonzentration in der Polymerzusammensetzung von 40 Gew.-% bis 78 Gew.-%, vorzugsweise von 45 Gew.-% bis 77 Gew.-%, bevorzugter von 50 Gew.-%. bis 70 Gew.-%, bezogen auf das Gesamtgewicht der Polymerzusammensetzung, beträgt.

12. Polymerzusammensetzung nach einem der Ansprüche 1 bis 11, wobei die Polymerzusammensetzung ein $D_k$ bei 2,45 GHz, gemessen gemäß ASTM D2520, von nicht mehr als 3,18, vorzugsweise nicht mehr als 3,15, bevorzugter nicht mehr als 3,10, und/oder ein $D_f$ bei 2,45 GHz, gemessen gemäß ASTM D2520, von höchstens 0,009 aufweist.

13. Polymerzusammensetzung nach einem der Ansprüche 1 bis 12, wobei das $PO_f$-Gewichtsverhältnis in der Polymerzusammensetzung von 3 % bis 20 %, vorzugsweise 3 % bis 15 %, beträgt.

14. Mobilelektronikvorrichtung-Komponente umfassend die Polymerzusammensetzung nach einem der Ansprüche 1 bis 13, wobei die Mobilelektronikvorrichtung-Komponente vorzugsweise eine Antenne, wie z.B. eine Mobilelektronikantenne, ein Antennenfenster, ein Antennengehäuse oder ein Mobilelektronikgehäuse ist.

15. Verfahren zur Herstellung einer Mobilelektronikvorrichtung-Komponente, umfassend:
zuerst Umspritzen, Spritzgiessen oder Spritzpressen der Polymerzusammensetzung nach einem der Ansprüche 1 bis 13 auf ein Metallsubstrat, um eine Baugruppe zu bilden, und dann Unterziehen der Baugruppe an Anodisierung.

## Revendications

**1.** Composition de polymère comprenant :

- une polyoléfine fonctionnalisée,
- un polyamide choisi parmi les polyphtalamides ayant un rapport molaire carbone/amide supérieur à 8,
- une fibre de verre, et
- rapport pondéral de polyoléfine fonctionnalisée ($PO_f$) de plus de 0 % et d'au plus 27 %,

dans laquelle

- le rapport pondéral $PO_f$ est donné par la formule : $100 \times \frac{W_{PO}}{W_{PO}+W_{PA}}$, et
- $W_{PA}$ et $W_{PO}$ sont respectivement le poids du polyamide et de la polyoléfine fonctionnalisée dans la composition de polymère ;

dans laquelle

- la polyoléfine fonctionnalisée comprend des motifs répétitifs $R_{PO1}$ et $R_{PO2}$ représentés respectivement par les formules suivantes :

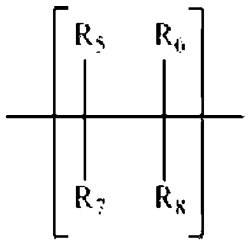
(6) et
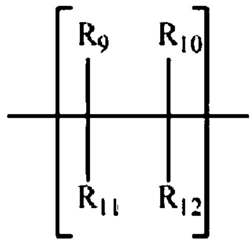
(7),

dans lesquelles $R_5$ à $R_8$ sont choisis indépendamment dans le groupe constitué par un hydrogène et un groupe alkyle représenté par la formule $-(CH_2)_m-CH_3$, où m est un entier de 0 à 5 ; $R_9$ à $R_{12}$ sont choisis indépendamment dans le groupe constitué par un hydrogène, un groupe alkyle représenté par la formule $-(CH_2)_{m'}-CH_3$, où m, est un entier de 0 à 5, et un groupe réactif qui réagit avec un groupe amine ou un groupe acide carboxylique du polyamide ; et où au moins l'un parmi $R_9$ à $R_{12}$ est un groupe réactif,

- la polyoléfine fonctionnalisée comprend de 0,05 % en moles à 1,5 % en moles de motif répétitif $R_{PO2}$ ;
- la polyoléfine fonctionnalisée est choisie dans le groupe constitué par un polypropylène fonctionnalisé, un polyméthylpentène fonctionnalisé, un polybutène-1 fonctionnalisé, un polyisobutylène fonctionnalisé, un caoutchouc éthylène propylène diène fonctionnalisé, un caoutchouc éthylène propylène diène fonctionnalisé, et un caoutchouc monomère éthylène propylène diène fonctionnalisé, et
- la teneur en fibres de verre dans la composition de polymère est de 20 % en poids à 55 % en poids, par rapport au poids total de la composition de polymère.

**2.** Composition de polymère selon la revendication 1, dans laquelle le polymère de polyoléfine fonctionnalisée est un polypropylène fonctionnalisé.

**3.** Composition de polymère selon l'une quelconque des revendications 1 ou 2, dans laquelle la polyoléfine fonctionnalisée est fonctionnalisée par un groupe réactif choisi dans le groupe constitué par un anhydride maléique, un époxyde, un isocyanate et un acide acrylique, de préférence le groupe réactif est l'anhydride maléique.

**4.** Composition de polymère selon l'une quelconque des revendications 1 à 3, qui exclut :

- un polyamide ou polyphtalamide semi-aromatique obtenu par polycondensation entre des monomères de diacide et de diamine, dans lequel un monomère est aliphatique et possède 6 atomes de carbone ou moins ; et/ou
- un polyphtalamide ayant un rapport molaire C/amide d'au plus 8 ; et/ou
- un polyamide semi-aromatique qui n'est pas un polyphtalamide ; et/ou
- un polyamide aliphatique ; et/ou
- tout polyamide ayant un poids moléculaire moyen en nombre inférieur à 1 600.

**5.** Composition de polymère selon l'une quelconque des revendications 1 à 4, dans laquelle le polyamide est au moins un polyphtalamide ayant un rapport molaire carbone/amide d'au moins 8,1, ou d'au moins 8,2, ou d'au moins 8,3, ou

d'au moins 8,4, ou d'au moins 8,5, ou d'au moins 9.

**6.** Composition de polymère selon l'une quelconque des revendications 1 à 4, dans laquelle le polyamide est un polyphtalamide choisi dans le groupe constitué par PA10,T/10,I ; PA10,T ; PA9,T ; et toute combinaison de ceux-ci.

**7.** Composition de polymère selon l'une quelconque des revendications 1 à 6, dans laquelle la polyoléfine fonctionnalisée est un polypropylène fonctionnalisé par un anhydride maléique en tant que groupe réactif.

**8.** Composition de polymère selon l'une quelconque des revendications 1 à 7, dans laquelle la fibre de verre a une constante diélectrique de 4,0 à 5,5 à une fréquence de 1 MHz mesurée selon la norme ASTM D150 et/ou a un module de traction d'au moins 76 GPa tel que mesuré selon la norme ASTM D2343.

**9.** Composition de polymère selon l'une quelconque des revendications 1 à 8, dans laquelle la concentration en fibres de verre dans la composition de polymère est de 25 % en poids à 55 % en poids, de préférence de 30 % en poids à 50 % en poids, sur la base du poids total de la composition de polymère.

**10.** Composition de polymère selon l'une quelconque des revendications 1 à 9, la concentration de polyoléfine fonctionnalisée dans la composition de polymère étant de 2 % en poids à 20 % en poids, de préférence de 2,5 % en poids à 15 % en poids, sur la base du poids total de la composition de polymère.

**11.** Composition de polymère selon l'une quelconque des revendications 1 à 10, dans laquelle la concentration en polyamide dans la composition de polymère est de 40 % en poids à 78 % en poids, de préférence de 45 % en poids à 77 % en poids, plus préférablement de 50 % en poids. % à 70 % en poids, sur la base du poids total de la composition de polymère.

**12.** Composition de polymère selon l'une quelconque des revendications 1 à 11, la composition de polymère ayant un $D_k$ à 2,45 GHz, mesuré selon la norme ASTM D2520, non supérieur à 3,18, préférablement pas supérieur à 3,15, plus préférablement pas supérieur à 3,10, et/ou un $D_f$ à 2,45 GHz, mesuré selon la norme ASTM D2520, d'au plus 0,009.

**13.** Composition de polymère selon l'une quelconque des revendications 1 à 12, dans laquelle le rapport pondéral de $PO_f$ dans la composition de polymère est de 3 % à 20 %, de préférence de 3 % à 15 %.

**14.** Composant de dispositif électronique mobile comprenant la composition de polymère selon l'une quelconque des revendications 1 à 13, de préférence, le composant de dispositif électronique mobile étant une antenne telle qu'une antenne électronique mobile, une fenêtre d'antenne, un boîtier d'antenne, ou un boîtier électronique mobile.

**15.** Procédé de préparation d'un composant dispositif électronique mobile, comprenant :
d'abord surmoulage, injection ou moulage par transfert de la composition de polymère selon l'une quelconque des revendications 1 à 13 sur un substrat métallique pour former un assemblage, puis soumission de l'assemblage à une anodisation.

**POLYAMIDE COMPOSITIONS WITH FUNCTIONALIZED POLYOLEFIN AND MOBILE ELECTRONIC DEVICE COMPONENTS CONTAINING THEM**

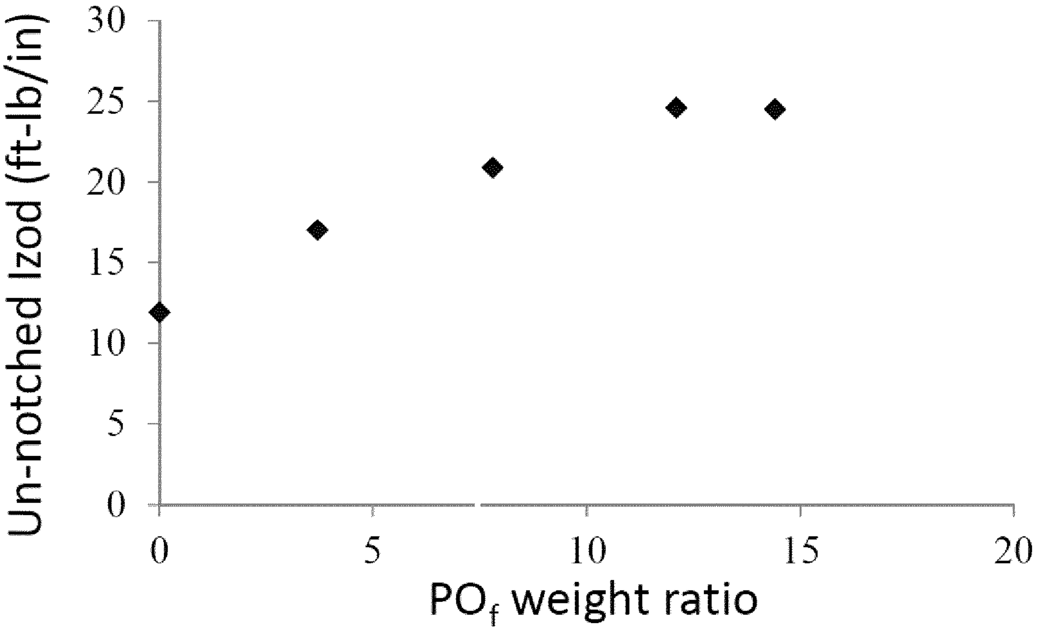


**FIG. 1**

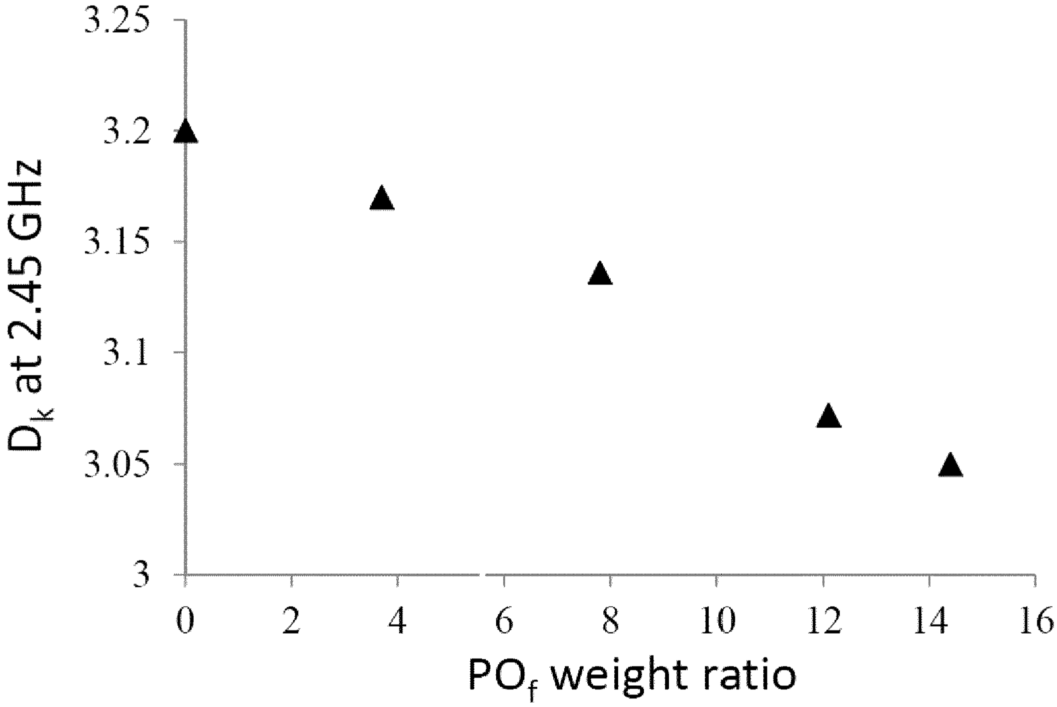


**FIG. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020104412 A1
- US 9441085 B2
- CN 111117232 A
- CN 105176077 B
- US 2016168381 A1
- CN 110437612 A


### Non-patent literature cited in the description


- **JOHN MURPHY**. Additives for Plastics Handbook, 43-48
- Fiberglass and Glass Technology. 2010, vol. XIV, 197-225